(19) **Europäisches Patentamt**
**European Patent Office**
**Office européen des brevets**

(11) **EP 3 259 905 B1**

(12) **EUROPEAN PATENT SPECIFICATION**

(45) Date of publication and mention
of the grant of the patent:
**12.12.2018 Bulletin 2018/50**

(51) Int Cl.:
*H04N 5/335* [(2011.01)]   *H04N 5/3745* [(2011.01)]
*G01J 1/44* [(2006.01)]

(21) Application number: **16718003.3**

(22) Date of filing: **19.02.2016**

(86) International application number:
**PCT/IB2016/050906**

(87) International publication number:
**WO 2016/132329 (25.08.2016 Gazette 2016/34)**

(54) **CIRCUIT ARCHITECTURE OF AN IMPROVED PIXEL FOR DETECTING AND CALCULATING THE NUMBER OF PHOTONS**

SCHALTUNGSARCHITEKTUR EINES VERBESSERTEN PIXELS ZUM ERKENNEN UND BERECHNEN DER ANZAHL VON PHOTONEN

ARCHITECTURE DE CIRCUIT D'UN PIXEL AMÉLIORÉ POUR DÉTECTER ET CALCULER LE NOMBRE DE PHOTONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2015 IT VI20150050**

(43) Date of publication of application:
**27.12.2017 Bulletin 2017/52**

(73) Proprietor: **Fondazione Bruno Kessler**
**38122 Trento (IT)**

(72) Inventors:
• **PERENZONI, Matteo**
**38068 Rovereto (TN) (IT)**

• **GASPARINI, Leonardo**
**38057 Pergine Valsugana (TN) (IT)**
• **MASSARI, Nicola**
**38057 Pergine Valsugana (TN) (IT)**

(74) Representative: **Marchioro, Paolo**
**Studio Bonini S.r.l.**
**Corso Fogazzaro, 8**
**36100 Vicenza (IT)**

(56) References cited:
**EP-A1- 2 728 373       GB-A- 2 487 958**
**US-A1- 2014 124 653**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention concerns a circuit architecture of a pixel of the improved type for detecting and counting photons.

The invention concerns also a first method for managing said circuit architecture of a pixel, here below simply referred to as "pixel" where not specified otherwise, in such a way as to count the photons incident on its surface during a given exposure time.

Furthermore, the invention concerns a second method for managing said pixel in such a way as to calculate the average arrival time of a photon within the observation time window, in a succession of reading cycles during said exposure time.

Finally, the invention concerns an image sensor comprising a matrix of pixels of the type described above, usually distributed in rows and columns, and electrically connected to first and second electronic management means respectively configured to generate the input signals to the pixels and to process the output signals produced by the same pixels.

As is known, many applications in the scientific and/or medical field require that the photons emitted by a light source or by a fluorescent body are detected and counted, in such a way as to create a two-dimensional digital image that will be successively processed in such a way as to obtain information of interest from it.

In particular, said applications may require the determination of the number of photons incident on the sensitive surface of a sensor, of the spatial coordinates related to the point of incidence of each one of said photons on said sensitive surface and, in addition or as an alternative to the above, of the time needed by each one of said photons to reach the same sensitive surface within an observation time window.

One of the most common applications based on said detection operations and on the generation of a related digital image is the technique known as FLIM (Fluorescence Lifetime Imaging Microscopy) in the molecular field. Fluorescence lifetime refers to the measurement of the average time of permanence of a fluorophore in the excited state before it returns to the ground state emitting a fluorescence photon. It is known that the emission of a fluorescence photon by a fluorophore does not take place within a fixed time interval. On the contrary, a time distribution is observable that can be described with an exponential decay function. The time constant that is characteristic of this decay, the fluorescence lifetime, falls within a time interval ranging from a few picoseconds to several dozens of nanoseconds. Regarding the electronic devices used to detect photons and, consequently, obtain the relevant information in said FLIM or other applications, these comprise a sensor provided with a matrix of pixels usually distributed in rows and columns. Each one of said pixels in turn comprises a sensitive element that in principle consists of a photodiode capable of generating an electric signal in the point where a photon is incident on its sensitive surface. In the case where single photons are detected, as in the case of said FLIM, the use of a special type of photodiode called SPAD (Single Photon Avalanche Diode) is known.

Furthermore, each pixel comprises further electronic circuitry, called "front end" in technical jargon, operatively connected to the photodiode, for the purpose of properly managing an electric signal and making it available at the output of the pixel, wherein said electric signal will be further processed by said second electronic management means to define said digital image. In greater detail, it is known that said electronic circuitry belonging to each pixel can manage the signal generated by the photodiode and concerning the number of photons detected and/or the moment when they are detected, in analogue mode or alternatively in digital mode, with the related advantages and disadvantages that will be illustrated below.

Based on the type and composition of said electronic circuitry located downstream of the photodiode, presently it is possible to implement two main functions, in such a way as to obtain one or more of said pieces of information. A first implementation, known by the acronym TCSPC (Time Correlated Single Photon Counting), makes it possible to assign an arrival time within a pre-established observation time window to each photon incident on the sensitive surface of each pixel. Advantageously, said technique makes it possible to obtain a high quantity of information related to an event and, consequently, to achieve a higher quality of the analysis.

However, according to said implementation said electronic circuitry, operatively connected to each pixel, must comprise a TDC converter (Time-to-Digital Converter) of the digital type or a TAC converter (Time-to-Amplitude Converter) of the analogue type, in such a way as to obtain an output electric signal related to the arrival time of a photon with respect to an external time reference. To disadvantage, the need to use said electronic circuitry causes a drastic decrease in the so-called "fill factor" related to the entire sensor. In particular, a sensor of the known type comprising a plurality of pixels in which the TCSPC technique is implemented has a fill factor that is lower than 1 %.

In order to overcome this drawback, it is possible to adopt a second computational approach and the related implementation technique, known by the term "time gating", for said circuitry. In this case, each pixel belonging to a sensor only counts the photons incident on its sensitive surface within a period of time during which the sensor is exposed to radiation. This information, in addition to the fact that, as already explained, the trend of photons over time (exponential) is known in the sector of fluorescence, makes it possible to perform simplified measurements to obtain, in any case, the data necessary to define a two-dimensional image. Therefore, this technique makes it possible to reduce the number of electronic components present on the surface of the sensor, consequently increasing the related fill factor.

However, in the case where said technique is implemented with digital circuitry, the percentage value related to the fill factor, though increasing with respect to the implementation of the TCSPC technique, does not reach satisfying levels. For this reason, an attempt has been recently made to provide a circuit architecture of the analogue "time-gated" type for each single pixel. In this way, advantageously, it has been possible to obtain image sensors with a fill factor value around 20%. However, an important drawback posed by the analogue implementation compared to the digital implementation lies in that it leads to increased non-uniformity and non-reliability of the count over time in relation to each pixel. Furthermore, said non-uniformity as well as a certain degree of non-linearity appears among the various pixels belonging to the same sensor. In particular, said negative characteristics are mainly due to the intrinsic characteristics of the photodiodes used, in particular to the variation in the breakdown voltage in the case where SPADs are used, and to the variable incremental distance that disadvantageously appears when the analogue meters of the known art are used.

Consequently, this drawback makes it necessary to carry out suitable setting procedures and/or post-processing procedures downstream of the same sensor.

The document US2014/124653 A1 describes a photon counting pixel structure comprising a circuitry to bias a photodiode, to enable transfer of the photodiode signal, to store charge corresponding to the arrived photons and to enable rad-out thereof.

The document EP2728373 A1 discloses a pixel circuit comprising a single photon avalanche diode (SPAD) and a measurement circuit comprising a capacitance.

The document GB2487958 A discloses a multi-mode photodetector pixel.

The present invention intends to overcome all the drawbacks described above. In particular, it is one of the objects of the invention to provide a compact-size circuit architecture of a pixel for detecting and counting photons. Consequently, it is an object of the invention to provide a pixel for detecting and counting photons that makes it possible to increase the percentage fill factor value related to the sensor in which said pixels are used.

It is another object of the invention to provide a pixel for detecting and counting photons that offers higher reliability and uniformity in the counting process, independently of the intrinsic characteristics of the photodiode and of the analogue counting channel present in the same pixel.

Therefore, it is the object of the invention to provide a pixel for detecting and counting photons that makes it possible to obtain sensors capable of delivering uniform and reliable output signals.

It is another object of the invention to provide a pixel that makes it possible to implement the photon counting process with shorter observation time windows (less than 1 ns) compared to the pixels known in the art.

Furthermore, it is the object of the invention to provide a pixel that is capable of serving several functions, based on the management signals it receives as inputs.

It is another, yet not the least important object of the invention to provide a pixel for detecting and counting photons that is capable of contributing to the reduction, if not to the complete elimination, of non-linearity of the input signals transmitted to the electronic management means located downstream of the pixel matrix, during the execution of the analogue-to-digital conversion.

The objects described above are achieved through the production of a pixel for detecting and counting photons according to the main claim.

Further characteristics and details of the pixel that is the subject of the invention are described in the dependent claims.

The invention concerns also a method for managing said pixel in such a way as to count the photons that are incident on the sensitive surface of the pixel itself, according to claim 9, and a method for managing said pixel in such a way as to calculate the average arrival time of a photon within an observation time window, in a succession of reading cycles during the exposure time, according to claim 13.

Finally, the invention concerns also an image sensor comprising a pixel matrix according to the invention.

The said objects, together with the advantages that will be described below, are highlighted in the description of some preferred embodiments of the invention that is provided by way of non-limiting example with reference to the attached drawings, wherein:

- Figure 1 shows a schematic view of the circuit architecture of the pixel that is the subject of the invention;
- Figure 2 shows a preferred embodiment of the circuit architecture of the pixel shown of the invention in Figure 1;
- Figure 3 shows the wave forms of the signals for managing the pixel of the invention shown in Figure 2 for the implementation of the "time gating" technique;
- Figure 4a shows the wave forms of the signals generated by the pixel of the invention in the case where the signals of Figure 3 are delivered as input signals to the same pixel and where a photon is incident on the sensitive surface of the pixel while the observation time window is open;
- Figure 4b shows the wave forms of the signals generated by the pixel of the invention in the case where the signals of Figure 3 are delivered as input signals to the same pixel, but no photon is incident on the sensitive surface of the pixel while the observation time window is open;
- Figure 5 shows the wave forms of the signals for managing the pixel of the invention shown in Figure 2 for the implementation of the function for calculating the average arrival time of photons using a TAC;

- Figure 6 shows the wave forms of the signals generated by the pixel of the invention in the case where the signals of Figure 5 are delivered as input signals to the same pixel and a photon is incident on the sensitive surface of the pixel while the observation time window is open;
- Figure 7 shows a schematic view of the electronic conversion means of the invention;
- Figure 8 shows a schematic view of the image sensor of the invention.

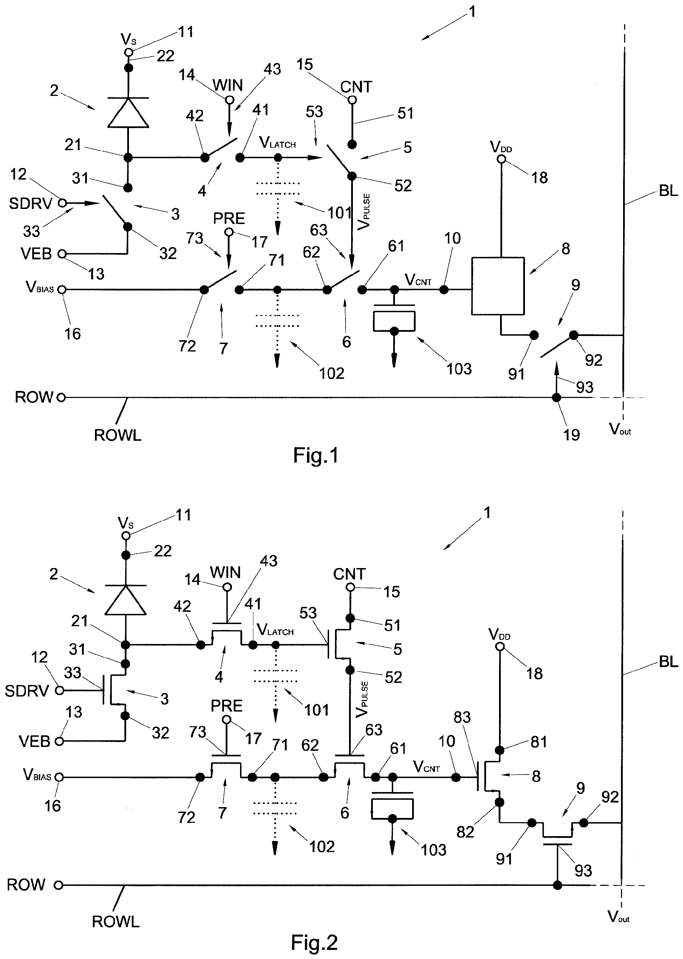

The circuit architecture of the pixel of the invention for detecting and counting photons is represented in principle in Figure 1 and in a preferred embodiment in Figure 2, and in both figures it is indicated as a whole by **1.**

First of all, it should be stated and specified that here below any reference to electronic interruption means should be understood, in general, as a reference to an electronic component that serves as a switch and therefore is capable of establishing or interrupting an electrical contact between a first and a second contact terminal belonging to it. Said electronic interruption means, furthermore, are provided with a switch over control terminal. By providing a suitable control signal as an input to said switch over control terminal, it is possible to manage the switch over from the conduction state to the inhibition state, or vice versa, of the electronic interruption means themselves. Regarding, again, the circuit architecture of the pixel **1** of the invention, more simply referred to as pixel **1** here below, as shown in Figure 1 it comprises a photodiode **2** having a first contact terminal **21**, preferably the anode, connected to the first contact terminal **31** of first electronic interruption means **3** and the second contact terminal **22**, preferably the cathode, connected to a first input pin **11** belonging to the same pixel **1**, so as to receive an input bias voltage $V_S$.

It cannot be excluded, however, that according to an alternative embodiment of the pixel **1** of the invention the first contact terminal **21** of the photodiode **2** may correspond to the cathode, which therefore would be connected to the first contact terminal **31** of said first electronic interruption means **3**, while the second contact terminal **22** of the same photodiode **2** may correspond to the anode, which therefore would be connected to said first input pin **11.**

Clearly, it is known that a photodiode **2** is a particular type of photodetector diode that works as an optical sensor, which means that it is capable of recognizing a given wavelength of the incident electromagnetic wave (absorption of the photon) and of transforming this event into a current signal, applying a suitable electrical bias potential between the first contact terminal **21** and the second contact terminal **22**, independently of how the same photodiode **2** is connected inside the circuit architecture.

According to the preferred embodiment of the invention described herein and illustrated in Figure 2, the photodiode **2** comprises a SPAD (Single Photon Avalanche Photodiode) **2** of the known type. It is also known that, in order to be able to detect a photon incident on its sensitive surface, said particular type of photodiode **2** needs to be reverse-biased above its breakdown voltage $V_{BD}$. Said operating mode is called Geiger mode.

It cannot be excluded, however, that according to alternative embodiments of the pixel **1** of the invention said photodiode **2** may be of another known type, different from the SPAD, provided that it is able to detect a photon incident on its sensitive surface and to consequently generate an electric current. Regarding, instead, said first electronic interruption means **3**, they have the switch over control terminal **33** connected to a second input pin **12**, so as to receive a first switch over control signal **SDRV** and the second contact terminal **32** connected to a third input pin **13**, so as to receive a reference voltage value **VEB.**

As is described in detail here below with reference to the preferred embodiment of the invention illustrated in Figure 2, by setting the reference voltage value **VEB** to ground, placing the first electronic interruption means **3** in the conduction state, and therefore setting the potential to zero at the level of the anode **21**, and setting the bias voltage $V_S$ at the level of the cathode **22** at a value equal to the breakdown voltage $V_{DB}$ of the SPAD **2** increased by a predefined extra bias voltage value $V_{EXC}$, the SPAD **2** is reverse-biased above the breakdown voltage value $V_{BD}$ and maintained in said condition.

However, in the case of said alternative embodiment of the invention, according to which the anode of the SPAD **2** is connected to the first input pin **11** and the cathode is connected to the first contact terminal **31** of the electronic interruption means **3**, the same SPAD **2** is managed by assigning the anode a fixed bias voltage value $V_S$ substantially equal to the breakdown voltage $V_{BD}$, while the cathode is assigned a potential equal to zero if the SPAD **2** has to be switched off or a reference value **VEB** if it has to be reverse-biased, wherein the combination $VEB + V_S$ must preferably be equal to $V_{BD} + V_{EXC}$. In any case, reverse-biasing the SPAD **2** at a voltage value above the breakdown voltage $V_{BD}$ determines the beginning of the so-called observation time window **OW** of the SPAD **2** itself.

Successively, according to the preferred embodiment described herein, inhibiting said first electronic interruption means **3** through a suitable value of the first switch over control signal **SDRV** makes the anode **21** of the SPAD **2** a floating anode and consequently the latter operates in said Geiger mode, that is, it can detect a photon that is incident on its sensitive surface.

The pixel **1** of the invention furthermore comprises, as shown in Figure 1, second electronic interruption means **4** having the first contact terminal **41** connected to a first charge accumulation element **101** and the second contact terminal **42** connected to the anode **21** of the photodiode **2**, in particular of the SPAD **2.** Furthermore, in said second electronic interruption means **4** the switch over control terminal **43** is connected to a fourth input pin **14** of the pixel **1**, in such a way as to receive a second switch over control signal **WIN**.

As is explained in greater detail below, at the moment when an event occurs, the arrival of a photon or a so-called "dark event", which determines the generation of the avalanche effect on the SPAD **2**, the difference in potential between the anode **21** and the cathode **22** tends to stabilize at the breakdown value $V_{BD}$, consequently switching off the SPAD **2** itself in an "automatic" manner. As the cathode **22** is permanently maintained at a voltage value equal to $V_S$, a voltage increase will take place at the level of the anode **21**, said voltage increase being equal to the value of said extra bias voltage $V_{EXC}$. This voltage will consequently propagate on the first charge accumulation element **101**, thus charging it, in the case where the second electronic interruption means **4** are maintained in the conduction state.

The other additional functions of said second interruption means **4** are defined here below during the description of the methods for managing the pixel **1** that is the subject of the invention.

As shown always in Figure 1, the pixel **1** furthermore comprises third electronic interruption means **5** having the first contact terminal **51** connected to a fifth input pin **15**, so as to receive a propagation signal **CNT**. Furthermore, the switch over control terminal **53** of said third electronic interruption means **5** is connected to the first charge accumulation element **101**, in such a way as to receive the voltage value $V_{LATCH}$ present in the latter as switch over control signal.

In other words, when the voltage on the switch over control terminal **53** reaches a pre-established value, the third electronic interruption means **5** are in the conduction state and the propagation signal **CNT** propagates on the second terminal **52** of the same.

Furthermore, the pixel **1** of the invention comprises fourth electronic interruption means **6** having the first contact terminal **61** connected to a third charge accumulation element **103** and to an output pin **10**, in such a way as to allow the withdrawal, from the pixel **1**, of the output voltage value $V_{CNT}$ present on said third charge accumulation element **103**. As will be clearly understood later on, said voltage value $V_{CNT}$ is determined based on the number of detected photons or on the average arrival time of the same photons while the observation time window **OW** is open, depending on which one of the two methods for managing the pixel **1**, illustrated here below, is implemented. In particular, the relationship between said number of photons or the average arrival time of the same photons and said voltage $V_{CNT}$ can follow an exponential law or approximate a linear behaviour based on the design characteristics of the circuit architecture. Regarding, again, the fourth electronic interruption means **6**, these have the second contact terminal **62** connected to the first contact terminal **71** of fifth electronic interruption means **7** and to a second charge accumulation element **102**. Furthermore, the switch over control terminal **63** of the same fourth electronic interruption means **6** is connected to the second contact terminal **52** of the third electronic interruption means **5**, so that they are switched over based on the voltage value $V_{PULSE}$ propagated on said second contact terminal **52**.

Finally, as shown in Figure 1, said fifth electronic interruption means **7** have the second contact terminal **72** connected to a sixth input pin **16**, so as to receive a reference voltage value $V_{BIAS}$, and have the switch over control terminal **73** connected to a seventh input pin **17**, so as to receive a third switch over control signal **PRE** as an input.

Preferably, according to the invention, each one of said electronic interruption means **3**, **4**, **5**, **6** and **7** of the pixel **1** respectively comprises a first, a second, a third, a fourth and a fifth transistor **3**, **4**, **5**, **6** and **7** of the MOS type. In particular, the first contact terminal **31**, **41**, **51**, **61** and **71** of each one of the electronic interruption means **3**, **4**, **5**, **6** and **7** corresponds to a first contact terminal **31**, **41**, **51**, **61** and **71** of the corresponding MOS transistor **3**, **4**, **5**, **6** and **7**, selected between the drain terminal and the source terminal, the second contact terminal **32**, **42**, **52**, **62** and **72** corresponds to the second contact terminal **32**, **42**, **52**, **62** and **72** of the same MOS transistor **3**, **4**, **5**, **6** and **7**, selected between the drain terminal and the source terminal, and, finally, the switch over control terminal **33**, **43**, **53**, **63** and **73** of each one of the electronic interruption means **3**, **4**, **5**, **6** and **7** corresponds to the gate terminal **33**, **43**, **53**, **63** and **73**.

It should be noted that the decision to use the more generic terms "first contact terminal" and "second contact terminal" of the MOS transistor in this context, instead of using the more specific terms "drain terminal" and "source terminal", is due to the fact that in practice the two terminals conventionally referred to as drain terminal and source terminal are interchangeable and therefore indistinguishable, especially in integrated electronics. That which actually happens is that, for the purposes of the behaviour of the MOS transistor, the function of "source" is performed by the contact terminal that has the lower potential for the nMOS transistors and the higher potential for the pMOS transistors.

According to the specific embodiment of the pixel **1** of the invention described herein and illustrated in Figure 2, each one of said electronic interruption means **3**, **4**, **5**, **6** and **7** respectively comprises a first, a second, a third, a fourth and a fifth transistor **3**, **4**, **5**, **6** and **7** of the nMOS type. In particular, as can be understood by comparing the generalized architecture of the pixel **1** of Figure 1 and that related to the preferred embodiment of Figure 2, the first contact terminal **31**, **41**, **51**, **61** and **71** of each of the electronic interruption means **3**, **4**, **5**, **6** and **7** conventionally corresponds to the drain terminal **31**, **41**, **51**, **61** and **71** of the respective nMOS transistor **3**, **4**, **5**, **6** and **7**, and the second contact terminal **32**, **42**, **52**, **62** and **72** conventionally corresponds to the source terminal **32**, **42**, **52**, **62** and **72** of the same nMOS transistor **3**, **4**, **5**, **6** and **7**.

According to other embodiments of the invention, different from the preferred embodiment described herein and illustrated in Figure 2, it cannot be excluded that the MOS transistors **3**, **4**, **5**, **6** and **7** with which said electronic interruption means **3**, **4**, **5**, **6** and **7** are made may be of the pMOS type. Clearly, the decision to make said electronic interruption means **3**, **4**, **5**, **6** and **7** using the pMOS transistor type, rather than the nMOS transistor type included in the preferred embodiment, implies the need to reverse the polarity of the control signals described below.

Advantageously, the exclusive use of nMOS transistors or, alternatively, the exclusive use of pMOS transistors for the implementation of the architecture of the pixel **1** of the invention makes it possible to reduce the size of the latter and to simplify its structure. Furthermore, as is explained here below, said nMOS (or pMOS) transistors furthermore make it possible to strengthen the management of the signals generated by the pixel **1**, thus contributing to solving the problem of non-uniformity that characterizes the pixels of the analogue type known in the art. In particular, the use of a nMOS transistor for making the second electronic interruption means **4** makes it possible, as explained in greater detail below, to store the output signal generated by the SPAD **2** on the first charge accumulation element **101** (voltage $V_{LATCH}$) and also to filter said signal in such a way as to eliminate any possible variation in the amplitude of the extra bias voltage $V_{EXC}$. In other words, the amplitude of the voltage downstream of said second nMOS transistor **4**, in the case where a photon is incident on the SPAD **2**, will necessarily have a constant value. In particular, in the case where the voltage value $V_{WIN}$ of the second switch over control signal **WIN** is set so that:

$$V_{WIN} - V_{TH1} \leq V_{EXC},$$

where $V_{TH1}$ is the value of the threshold voltage of said second nMOS transistor **4**, the maximum amplitude of the voltage at the drain terminal **41** of the same second nMOS transistor **4**, and therefore of the voltage $V_{LATCH}$, will be equal to $V_{WIN} - V_{TH1}$.

This means that the input voltage at the gate terminal **53** of the third nMOS transistor **5** can have two values, a first value substantially equal to 0 V, in the case where no photon has been detected during the opening of the observation time window **OW** of the SPAD **2**, and a second value equal to $V_{WIN} - V_{TH1}$, in the case where a photon has actually reached the sensitive surface of the SPAD **2**.

Always according to the preferred embodiment of the pixel of the invention, the first charge accumulation element **101** comprises the gate capacity of the third nMOS transistor **5**. For this reason, the first charge accumulation element is represented with dotted lines in Figure 2.

Furthermore, preferably but not necessarily, the second charge accumulation element **102** comprises the parasitic capacity defined between the drain terminal **71** of the fifth nMOS transistor **7** and the source terminal **62** of the fourth nMOS transistor **6**. Also in this case, the second charge accumulation element **102** is represented with dotted lines in Figures 1 and 2. Finally, the third charge accumulation element **103** is preferably constituted by a capacitor **103** of the MOS type.

Preferably but not necessarily, the pixel **1** that is the subject of the invention comprises a buffer amplifier **8** interposed between the output pin **10** and the first contact terminal **91** of further sixth electronic interruption means **9**. In particular, in said sixth electronic interruption means **9** the switch over control terminal **93** is connected to a ninth input pin **19**, so as to receive a fourth switch over control signal **ROW**, and the second contact terminal **92** is suited to be connected to an output bitline **BL.**

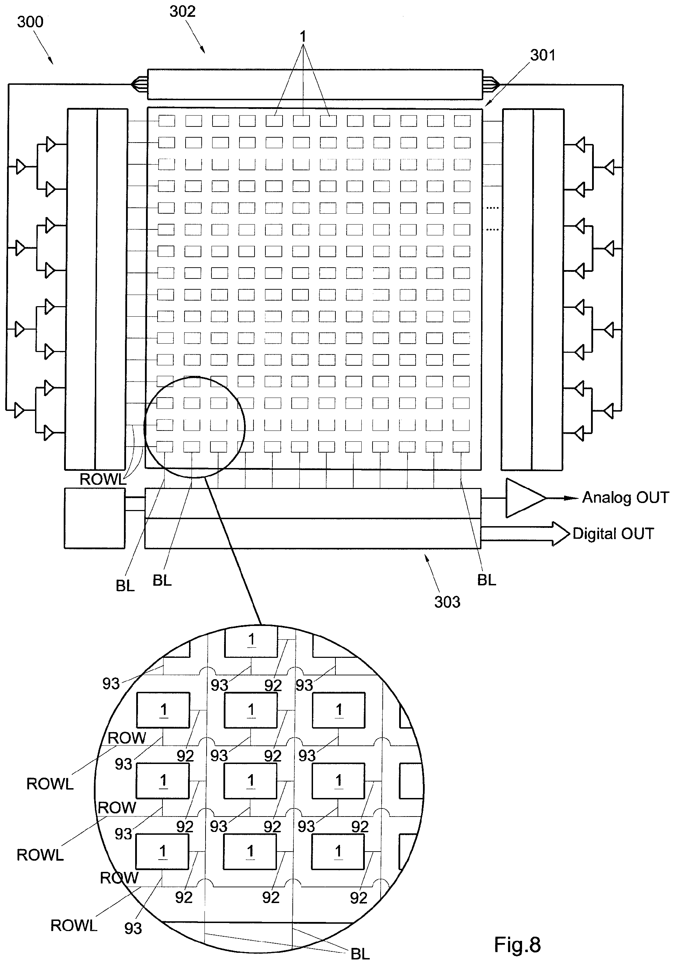

The combination between said buffer amplifier **8** and said sixth electronic interruption means **9** makes it possible to operatively connect several pixels **1** of the invention belonging to the same sensor **300** on a single bitline **BL** from which it is possible to withdraw the output signal generated by each one of them. In particular, as shown in Figure 8, in a sensor **300** a bitline **BL** usually makes it possible to connect in parallel said second contact terminal **92** of a plurality of pixels **1** belonging to the same column, while a control line **ROWL** is connected to the switch over control terminal **93** of said sixth electronic interruption means **9** belonging to the plurality of pixels **1** of a same row of the sensor **300**. In this way, by enabling the control signal **ROW** of the same row, it is possible to extract the output voltage of each pixel **1** belonging to said row from each one of the bitlines **BL** corresponding to the columns.

Also in this case, preferably but not necessarily, said sixth electronic interruption means **9** and, furthermore, said buffer amplifier **8** respectively comprise a sixth and a seventh transistor of the MOS type **9** and **8**.

In particular, as regards the seventh MOS transistor **8** making up the buffer amplifier **8**, as shown in Figure 2, it has the gate terminal **83** connected to the output pin **10**, a first contact terminal **81**, to be selected between the drain terminal and the source terminal, connected to an eighth input pin **18** so as to receive a power supply voltage $V_{DD}$, and the second contact terminal **82**, to be selected between the drain terminal and the source terminal, connected to said first contact terminal **91**.

In even greater detail, according to the preferred embodiment of the pixel **1** of the invention shown in Figure 2, the sixth and the seventh MOS transistors **9** and **8** are transistors of the nMOS type and the first contact terminal **91** and **81** and the second contact terminal **92** and **82** of each one of them respectively correspond to the drain terminal **91** and **81** and to the source terminal **92** and **82**. In this way, the nMOS transistor **8** is used in the so-called "source follower" mode or common drain mode.

It cannot be excluded, however, that in different embodiments of the invention each one of said transistors **8** and **9** of the MOS type can be obtained by means of the pMOS technology rather than with the nMOS technology.

It cannot be excluded, however, that in different embodiments of the pixel **1** of the invention the various electronic interruption means **3**, **4**, **5**, **6**, **7**, **8** and **9** may comprise components that are different from said MOS transistors, in particular nMOS or pMOS transistors, provided that they can serve the same functions.

Finally, according to the invention, the circuit architecture of the pixel **1** is carried out as an integrated circuit in the solid state on a semi-conductor substrate, preferably made of silicon.

As already mentioned, the invention includes also the method for managing the pixel **1** of the invention for counting the photons incident on the sensitive surface of the pixel **1** itself. In other words, said management method makes it possible to manage the pixel **1** in such a way as to implement said "time gating" technique.

It should be noted that, in general, since the image sensors comprising a plurality of pixels are suited to be exposed to a light source or to a fluorescent body for a certain period of time **T** and since, furthermore, a SPAD belonging to a pixel needs a recharge step after the occurrence of an avalanche event, in order to restore its operating condition, during said exposure time **T** a predefined number **x** of photon reading cycles **R** is carried out for each pixel.

In particular, for each single reading cycle **R**, each pixel, according to the "time gating" technique, will be able to detect, within an observation time window **OW** with pre-established duration, whether a single photon is incident on its sensitive surface or not. Successively, the SPAD belonging to the pixel is disabled in order to restore its condition and prepare it for a successive reading cycle **R.** Therefore, during said exposure time **T**, each pixel can count a number of photons ranging from zero (no photon reaches the pixel) to x (one photon for each reading cycle **R** is detected).

The above having been specified, the counting method of the invention includes an initialization step that consists in setting the input bias voltage $V_S$ to the first input pin **11** and maintaining it for the entire exposure time **T** at a value equal to the breakdown voltage $V_{BD}$ of the photodiode (SPAD) **2** increased by a predefined extra bias voltage value $V_{EXC}$.

Preferably, but not necessarily, said extra bias voltage value $V_{EXC}$ is fixed at a value of 3.3 V.

It cannot be excluded, however, that in alternative embodiments of the method of the invention said extra bias voltage $V_{EXC}$ may be set at different values.

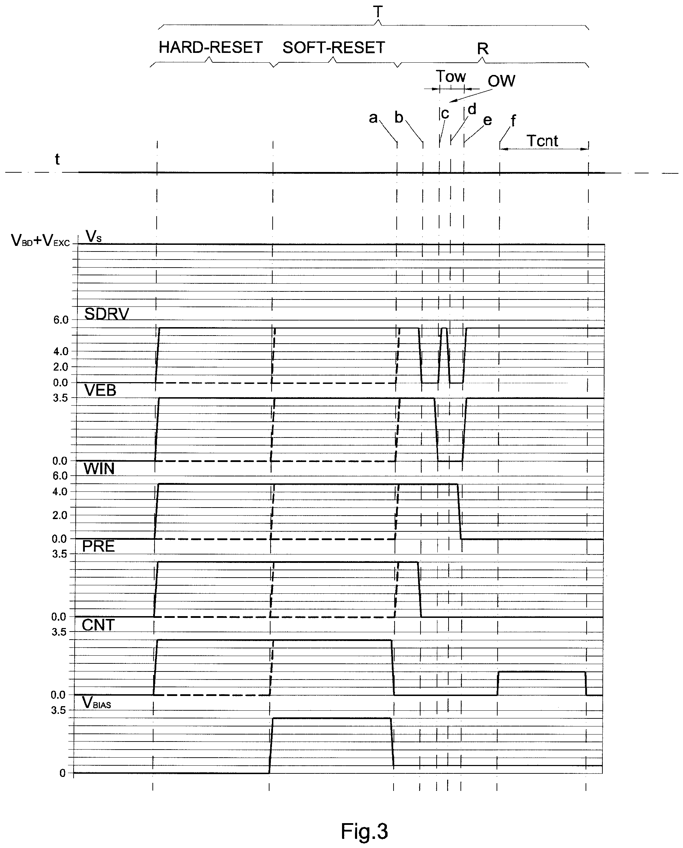

This condition, in the case where the anode **21** of the photodiode (SPAD) **2** is substantially set to ground, makes it possible to bias the same photodiode (SPAD) **2** above the breakdown voltage $V_{BD}$, that is, as already explained, in Geiger mode. The value of the bias voltage $V_S$ can be observed in Figure 3.

Furthermore, the counting method of the invention comprises, for each reading cycle **R**, the execution of a first operating step that in turn includes the simultaneous execution of the operations described below and indicated as a whole by **a**) in Figure 3.

The first operation includes enabling the second switch over control signal **WIN** in such a way as to place the second electronic interruption means **4**, in particular the second nMOS transistor **4**, in the conduction state. The second and the third operation respectively include setting the reference voltage value **VEB** so that it is substantially equal to the extra bias voltage value $V_{EXC}$ and enabling the first control signal **SDRV** in such a way as to disable the photodiode (SPAD) **2**.

Preferably but not necessarily, according to the preferred embodiment of the method of the invention described herein, the second switch over control signal **WIN** and the first control signal **SDRV** are set at a value equal to 5 V.

The fourth operation includes disabling the propagation signal **CNT** on the corresponding fifth input pin **15**. The combination of said four operations thus makes it possible to set the voltage $V_{PULSE}$ to zero and to inhibit the conduction capacity of the fourth interruption means **6**, in particular of the fourth nMOS transistor **6**.

The fifth and the sixth operation of said step **a**) respectively include enabling the third switch over control signal **PRE** on the seventh input pin **17** and setting the reference voltage $V_{BIAS}$ on the sixth input pin **16** at a first pre-established value in such a way as to precharge the second charge accumulation element **102** at a voltage value equal to said first reference voltage value $V_{BIAS}$. According to the preferred embodiment of the invention, said first pre-established value for the reference voltage $V_{BIAS}$ is set at approximately 0.5 V. Also in this case, however, it cannot be excluded that in alternative embodiments of the method of the invention said reference voltage may be set at different values.

After step **a**), the method of the invention includes a second step **b**), the first operation of which is to disable the third switch over control signal **PRE** on the seventh input pin **15**, in such a way as to inhibit the fifth interruption means **7**, in particular the fifth nMOS transistor **7** represented in Figure 2. This operation has the purpose to insulate the circuit branch including the second and the third charge accumulation element **102** and **103** from the reference voltage value $V_{BIAS}$. The second operation of step **b**) consists in disabling the first control signal **SDRV.**

The third step **c**) of the method of the invention, preferably carried out after a predefined time interval from said second step **b**), includes the substantially simultaneous execution of the operations described below. The first and the second operation of said step **b**) are respectively to set the reference voltage value **VEB** to ground and to enable the first control signal **SDRV.** Said two operations, therefore, make it possible to place the first electronic interruption means **3**, in particular the first nMOS transistor **3**, in the conduction state and to reverse-bias the photodiode (SPAD) **2** at the bias voltage $V_S$, as explained above. In other words, the observation time window **OW** related to the photodiode (SPAD) **2** starts in said step **c**). Furthermore, said operations make it possible to discharge the first charge accumulation element **101**. The fourth step **d**) of the method of the invention, carried out after a pre-established time interval from the third step **c**), consists in disabling the first switch over control signal **SDRV**, in such a way as to insulate the anode **21** of the photodiode (SPAD) **2**. Said operation places the photodiode (SPAD) **2** in the operating condition in which it can detect any photon that is incident on its sensitive surface.

According to the method of the invention, after a pre-established time interval $T_{OW}$ which corresponds to the duration of the observation time window **OW** and during which the photodiode (SPAD) **2** is able to detect the arrival of a photon, the fifth step **e**) is carried out, which consists in disabling the second switch over control signal **WIN**, in such a way as to inhibit the second electronic interruption means **4**, in particular the second nMOS transistor **4**. Said step **e**), in fact, determines the closure of the observation time window **OW**.

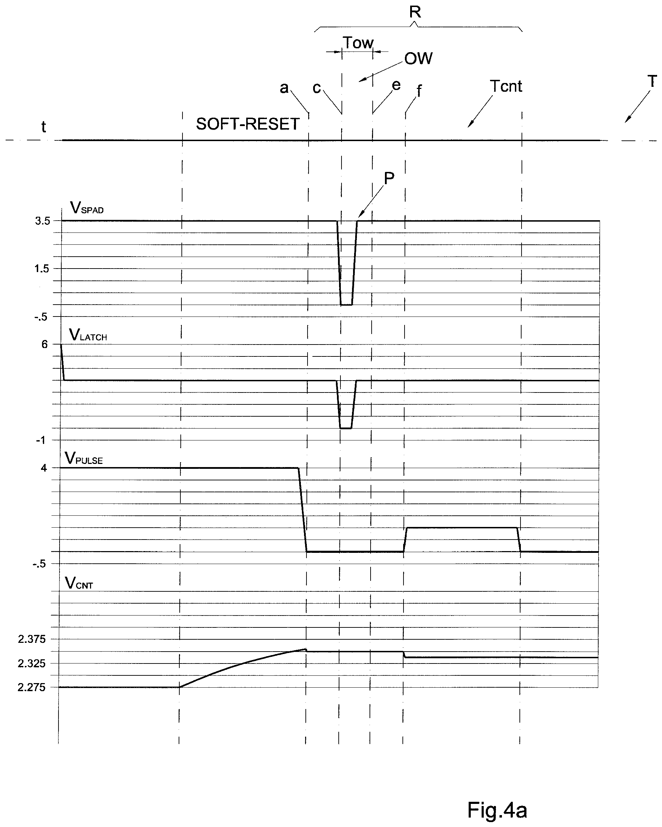

In the case where, during the time interval $T_{OW}$ of duration of the observation time window **OW** between the fourth step **d**) and the fifth step **e**) of the method of the invention, a photon should reach the sensitive surface of the photodiode (SPAD) **2** (instant indicated by **P** in Figure 4a), an avalanche effect is generated in the latter, which produces an electric current between the anode **21** and the cathode **22** that consequently causes a progressive reduction in the voltage difference between them, until reaching the breakdown value $V_{BD}$.

In this last condition, as is known, the SPAD **2** is inhibited and no more able to detect the arrival of a further photon within the same observation time window **OW**.

As already explained, since the voltage difference between the two terminals of the SPAD **2** reaches the breakdown value $V_{BD}$ and the bias voltage value $V_S$ applied to the cathode **22** of the same SPAD **2** has a predefined and fixed value ($V_S = V_{BD} + V_{EXC}$), it is clear that on the anode **21** there is a voltage value substantially equal to $V_{EXC}$. Said voltage value, therefore, is present also on the second terminal **42** of the second electronic interruption means **4** that are in the conduction state, since the second switch over control signal **WIN** is enabled. Consequently, said voltage value $V_{EXC}$ tends to propagate also on the first terminal **41** of said second electronic interruption means **4** and therefore on the first charge accumulation element **101**, where said voltage value $V_{EXC}$ is stored. More precisely, since, according to the preferred embodiment of the method, a pixel **1** is managed whose second electronic interruption means are constituted by an nMOS transistor, as shown in Figure 2, and since, as already mentioned above, the second switch over control signal **WIN** is set at such a voltage value $V_{WIN}$ that $V_{WIN} - V_{TH1} <= V_{EXC}$, where $V_{TH1}$ represents the threshold voltage value of said second nMOS transistor **4**, the voltage that propagates between the source terminal **42** and the drain terminal **41** of the latter cannot exceed the maximum value equal to $V_{WIN} - V_{TH1}$. This characteristic, advantageously, makes it possible to stabilize the voltage value $V_{LATCH}$ present on the first charge accumulation element **101** and on the gate terminal **53** of the third nMOS transistor **5**, even in the case where the extra bias voltage $V_{EXC}$ presents some variations. In other words, the second nMOS transistor **4** works as a stabilization filter, a function known by the name of "clamping", thus contributing to the reduction of any non-uniformity of the pixel **1** due to the intrinsic characteristics of the SPAD **2**.

The signals related to the various components of the pixel **1** of the invention generated during the execution of said operating steps, in the case where a photon results to be incident on the sensitive surface of the SPAD **2**, are illustrated graphically in Figure 4a.

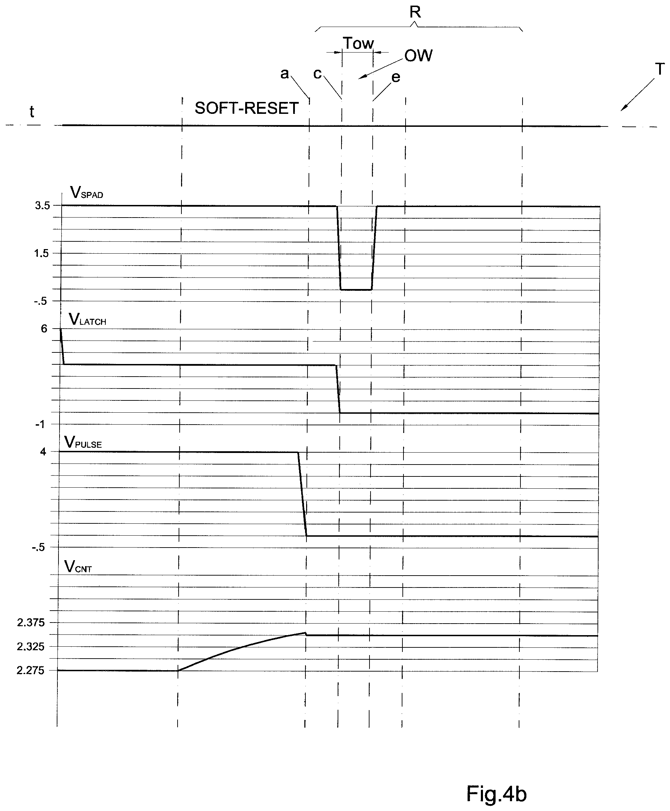

On the contrary, the signals related to the various components of the pixel **1** of the invention generated during the execution of said operating steps, in the case where during the time interval $T_{OW}$ of duration of the observation time window **OW** no photon is detected and therefore no avalanche effect is generated on the SPAD **2**, are illustrated graphically in Figure 4b. In particular, it can be noted that on the first charge accumulation element **101** the voltage value $V_{LATCH}$ remains substantially equal to 0 V.

Finally, the method of the invention includes a sixth step **f**) in which the propagation signal **CNT** is enabled for a predefined and fixed time $T_{CNT}$ for all of the reading cycles **R**, following the closure of said observation time window **OW**. In the case where a photon is detected while the observation time window **OW** is open, said step **f**) and said third electronic interruption means **5** advantageously have the purpose to propagate a control signal $V_{PULSE}$ with a certain predefined delay on the switch over control terminal **63** of the fourth electronic interruption means **6**, as shown in Figure 4a. Said propagated signal, as already explained, remains the same for all of the reading cycles **R** that follow one another in the pixel **1** during said exposure time **T**. In fact, in the case where the voltage value $V_{LATCH}$ generated at the ends of the first charge accumulation element **101** is directly delivered as an input voltage to the switch over control terminal **63** of the fourth electronic interruption means **6**, the time instant when said fourth electronic interruption means **6** are placed in the conduction state would depend on the moment of arrival of the photon within the observation time window **OW**.

Consequently, said last approach would disadvantageously introduce a non-uniformity in the management of the charge transfer between the second and the third charge accumulation element **102** and **103**, as is described here below.

Among other things, obviously, at the level of the switch over control terminal **53** of the third electronic interruption means **5** there is a signal that enables conduction even after the closure of the observation time window **OW**, as at the ends of the first charge accumulation element **101** a voltage equal to $V_{LATCH}$ is maintained.

Preferably, the counting method of the invention is applied to a pixel **1** according to the preferred embodiment of the invention represented in Figure 2, wherein the third electronic interruption means **5** are constituted by an nMOS transistor **5**. Said characteristic, together with the fact that, preferably, the propagation signal **CNT**, when enabled, is set at such a voltage value that **CNT** $<= V_{WIN} - V_{TH2}$, where in this case $V_{TH2}$ is the threshold voltage of said third nMOS transistor **5**, advantageously makes it possible to deliver a control signal $V_{PULSE}$ as an input signal to the switch over control terminal **63** of the fourth electronic interruption means **6**, wherein said control signal $V_{PULSE}$, in addition to having stable duration, also has fixed amplitude for all the reading cycles **R**. This further reduces any non-uniformities of the signals managed in the pixel **1** between the various reading cycles **R** during the exposure time **T**.

In particular, as already mentioned above, the fact that the input switch over control signal $V_{PULSE}$ delivered to the fourth electronic interruption means **6**, in particular to the fourth nMOS transistor **6**, is constant in terms of duration and amplitude for all of the reading cycles **R** in which a photon is detected advantageously makes it possible to transfer the same quantity of charge between the second and the third charge accumulation element **102** and **103** for all of said reading cycles **R**. Therefore, knowing the size of the transferred charge for each individual reading cycle **R** and the value of the charge present in the third charge accumulation element **103** at the beginning of said exposure time **T**, at the end of the latter it is possible to obtain the exact number of detected photons.

According to the preferred embodiment of the invention, for each reading cycle **R** in which a photon is detected, said charge transfer takes place in the direction from the third charge accumulation element **103** to the second charge accumulation element **102**. In order to define said charge transfer direction, it is therefore necessary, during the initialization step of the pixel **1**, to precharge the third charge accumulation element **103** at a predefined value, as is described in detail here below. In particular, said third charge accumulation element **103** must be precharged at a value at least equal to the transferred charge value for each reading cycle **R** multiplied by the number **x** of reading cycles carried out during said exposure time **T**.

For this purpose, the method of the invention preferably comprises a so-called "soft-reset" step, which is carried out before starting the various reading cycles **R**. This soft-reset step consists in enabling the first switch over control signal **SDRV** and setting the reference voltage **VEB** at a voltage value substantially equal to the extra bias voltage value $V_{EXC}$, in such a way as to disable the photodiode (SPAD) **2**. Furthermore, the soft-reset step also consists in enabling the second switch over control signal **WIN**, the third switch over control signal **PRE** and the propagation signal **CNT** and setting the reference voltage $V_{BIAS}$ at a second predefined initialization voltage value. These operations, in fact, make it possible to place the second, third, fourth and fifth electronic interruption means **3**, **4**, **5** and **6** in the conduction state, so as to charge the second charge accumulation element **102** and the third charge accumulation element **103** at said second predefined initialization voltage value.

As explained above, in order to ensure the correct functionality of the pixel **1** of the invention through said management method, in particular in order to allow the charge transfer from the third charge accumulation element **103** to the second charge accumulation element **102**, said second pre-established voltage value imposed by the reference voltage $V_{BIAS}$ must at least be equal to the transferred charge value for each individual reading cycle **R** multiplied by the number **x** of reading cycles that are carried out during said exposure time **T**.

Since, furthermore, according to the preferred embodiment of the invention, for each reading cycle **R** in which a photon is detected there must be a charge transfer from the third charge accumulation element **103** to the second charge accumulation element **102**, which at the beginning of each reading cycle **R** is re-initialized at the first reference voltage value $V_{BIAS}$, in any condition said first voltage value must be lower than the charge value present in the third charge accumulation element **103**. Therefore, the second voltage value planned for the reference voltage $V_{BIAS}$ must clearly exceed said first voltage value. Preferably, the second voltage value at which the reference voltage $V_{BIAS}$ is set is equal to 3.3 V.

However, it cannot be excluded that, according to a variant embodiment of the counting method of the invention, the charge transfer for each individual reading cycle **R** in which a photon is detected may occur in the opposite direction, that is, from the second charge accumulation element **102** to the third charge accumulation element **103**. In other words, according to said construction variant, the third charge accumulation element **103** is charged with a pre-established voltage value for each reading cycle **R** in which said detection of a photon takes place.

In any case, at the end of the exposure time **T**, a voltage value $V_{CNT}$ related to the number of photons counted is made available to said output pin **10**.

Furthermore, the method of the invention preferably includes also a so-called "hard-reset" step, which is carried out before the execution of said soft-reset step. The hard-reset step, in particular, includes the execution of all the operations included in the soft-reset step, except that the reference voltage $V_{BIAS}$ must not be initialized at said second pre-established voltage value, but instead is set to ground, in such a way as to completely discharge the second and third charge accumulation elements **102** and **103**. Said hard-reset operation advantageously makes it possible to avoid the phenomenon that in technical jargon is called "lag", that is, the reappearance of part of the image generated in the exposure time **T** preceding the current time, in the case where only the soft-reset step is planned.

The invention includes also a second method for managing the pixel **1** of the invention. In particular, said second management method makes it possible to calculate the average arrival time of a photon within the observation time window **OW** in a succession of reading cycles **R.** In other words, said method makes it possible to use the circuit architecture of the pixel **1** of the invention as a TAC (Time-to-Amplitude Converter) for the determination of the average arrival time of the photons at the end of an exposure time **T** in which **x** reading cycles **R** are performed.

Like the counting method, also the method for calculating the average arrival time consists in initializing some input signal values and maintaining them constant for the entire exposure time **T.**

In particular, a first operation, as in the case of the previous method, consists in setting the input bias voltage $V_S$ to the first input pin **11** at a value equal to the breakdown voltage $V_{BD}$ of the photodiode (SPAD) **2** increased by a predefined extra bias voltage value $V_{EXC}$. Furthermore, the operation also consists in enabling and maintaining the second switch over control signal **WIN** during the execution of said calculation, in such a way as to place and maintain the second electronic interruption means **4** in the conduction state.

Finally, the operation is also intended to enable the third switch over control signal **PRE** on the seventh input pin **17.**

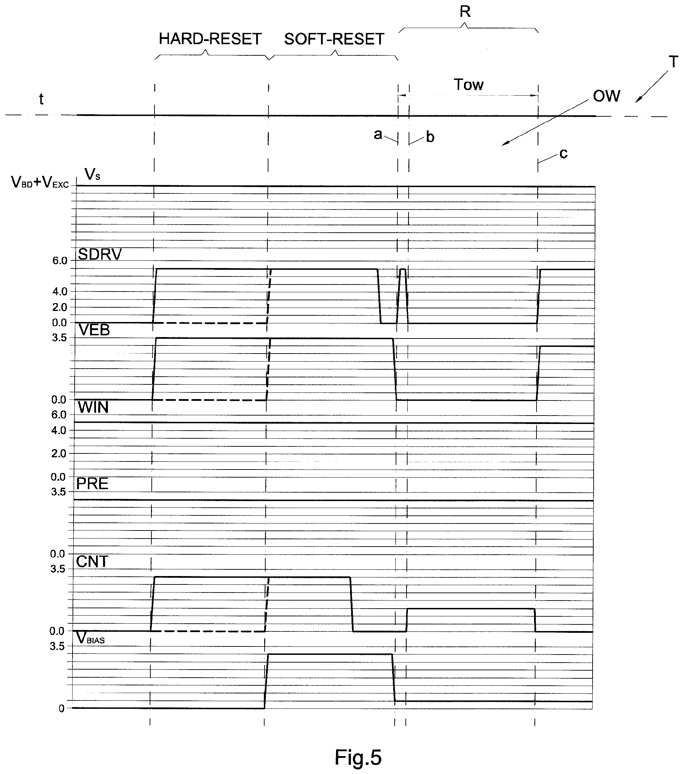

Furthermore, said second method of the invention for calculating the average arrival time comprises, for each reading cycle **R**, the execution of a first operating step that, in turn, includes the substantially simultaneous execution of the operations indicated as a whole by **a**) in Figure 5. In particular, said operations consist in setting the reference voltage value **VEB** to ground and enabling the first control signal **SDRV**, in such a way as to place the first electronic interruption means **3,** in particular the first nMOS transistor **3**, in the conduction state, so as to reverse-bias the photodiode (SPAD) **2** at the bias voltage $V_S$ and to discharge the first charge accumulation element **101.**

As for the previous method, said operations determine the beginning of the observation time window **OW** of said photodiode (SPAD) **2.**

The first step **a**) furthermore consists in setting the reference voltage $V_{BIAS}$ on the sixth input pin **16** at a first pre-established voltage value. Preferably, said first pre-established voltage value for the reference voltage $V_{BIAS}$ is set so that it is equal to 0.5 V.

Regarding the second step **b**) of the second method of the invention, carried out after a predefined time interval from the first step **a**), it consists in disabling the first switch over control signal **SDRV**, in such a way as to insulate the anode **21** of the photodiode (SPAD) **2.** Said step **b**) places the photodiode (SPAD) **2** in the operating condition in which it can detect any photon incident on its sensitive surface. Furthermore, said second step **b**) also consists in enabling the propagation signal **CNT** substantially at the same time.

After a time interval $T_{OW}$ established for the duration of the observation time window **OW**, during which the photodiode (SPAD) **2** can detect the arrival of a photon, the method of the invention includes the execution of the third step **c**), which consists in disabling the propagation signal **CNT**. This step **c**) determines the inhibition of the fourth electronic interruption means **6**, as it does not allow the delivery of an input control signal $V_{PULSE}$ to the switch over control terminal **63** of the latter. In practice, said step **c**) actually closes the observation time window **OW** of the photodiode (SPAD) **2.**

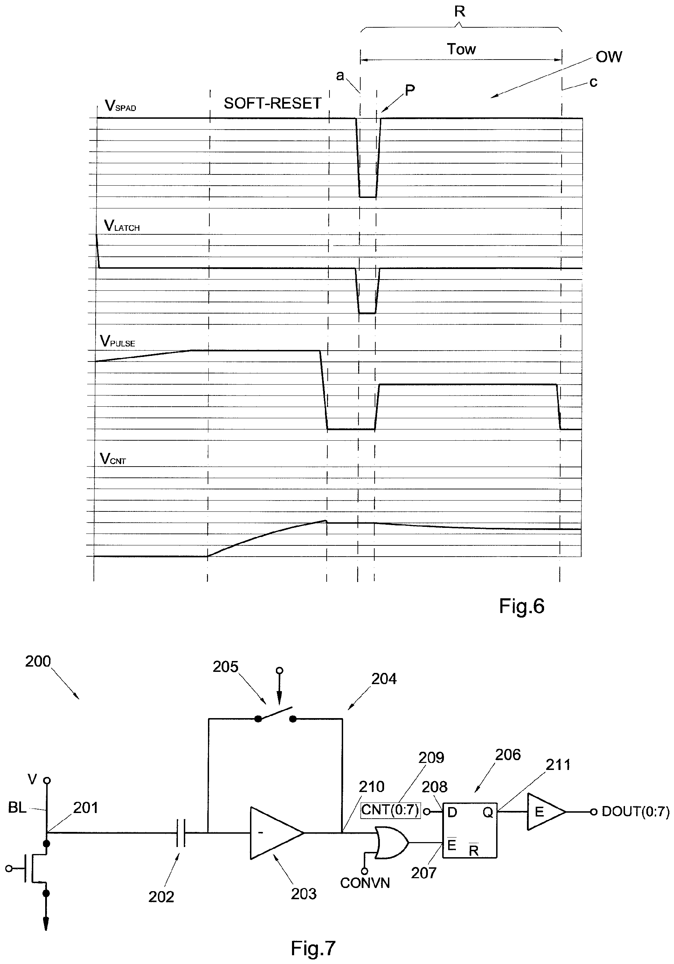

In the case where, during the time interval $T_{oW}$ of duration of the observation time window **T,** between the second step **b**) and the third step **c**) of said method of the invention, a photon is incident on the sensitive surface of the photodiode (SPAD) **2** (instant indicated by **P** in Figure 6), an avalanche effect is generated in the latter and determines the production of a current between its ends. Consequently, there is a progressive reduction in the voltage difference between the anode **21** and the cathode **22** of the same photodiode (SPAD) **2** until it settles at the breakdown value $V_{BD}$. As clarified in the description of the previous method, said reduction in the potential difference determines the generation on the anode **21** of a voltage value that is equal to the extra bias voltage value $V_{EXC}$.

Said voltage $V_{EXC}$, consequently, propagates through the first electronic interruption means **4** until reaching the switch over control terminal **53** of the third electronic interruption means **5**, as the second electronic interruption means **4** are in a permanent conduction state. Furthermore, since said second method of the invention is preferably implemented in the preferred embodiment of the pixel **1** represented in Figure 2, according to which said second and third electronic interruption means **4** and **5** are constituted by nMOS transistors **4** and **5**, and since the second switch over control signal **WIN** is fixed at such a voltage value $V_{WIN}$ that $V_{WIN} - V_{TH1} <= V_{EXC}$ and the propagation signal **CNT**, when enabled, is fixed at such a voltage value that $CNT <= V_{WIN} - V_{TH2}$, for the reasons explained above, as long as the propagation signal **CNT** is enabled, an input signal $V_{PULSE}$ is delivered to the switch over control terminal **63** of the fourth interruption means **6**, said input signal having predefined and constant amplitude for all the reading cycles **R** that follow one another. However, differently from that which happens for the counting method of the invention, in this case the duration of said propagated output signal $V_{PULSE}$ emitted by the second terminal **52** of the third electronic interruption means **5** varies depending on the instant of arrival of a photon on the sensitive surface of the photodiode (SPAD) **2** within the observation time window **OW**.

Consequently, the quantity of charge transferred between the third charge accumulation element **103** and the circuit branch on which the reference voltage value $V_{BIAS}$ is fixed varies depending on the duration of the propagated signal $V_{PULSE}$ and, therefore, on said arrival time of the photon.

Therefore, at the end of the exposure time **T**, as the number **x** of reading cycles **R** carried out is known, it is possible to withdraw a voltage value $V_{CNT}$ from the output pin **10** based on the average value of the arrival time of the photons in said reading cycles **R**.

As for the counting method, also the preferred embodiment of said method for calculating the average arrival time of photons includes, for each reading cycle **R** in which a photon is detected, a charge transfer from the third charge accumulation element **103** towards the circuit branch in which it is set as reference voltage value $V_{BIAS}$.

For this purpose, when initializing the pixel **1**, it is necessary to precharge the third charge accumulation element **103** at a pre-established value, as described in detail here below. In particular, the value at which said third charge accumulation element **103** must be precharged needs to be at least equal to the quantity of charge transferred for the single reading cycle **R** in which the photon is detected immediately after the opening of the observation time window **OW**, multiplied by the number **x** of reading cycles **R** carried out during said exposure time **T**.

In particular, the method of the invention preferably comprises a so-called "soft-reset" step that is carried out before the reading cycles R. Said soft-reset step consists in enabling the first switch over control signal **SDRV** and setting the reference voltage **VEB** at a voltage value substantially equal to the extra bias voltage value $V_{EXC}$, in such a way as to disable the photodiode. Furthermore, in order to precharge said third charge accumulation element **103**, said soft-reset step includes the operation of enabling the propagation signal **CNT**. Finally, in the soft-reset step the reference voltage $V_{BIAS}$ is set at such pre-established initialization voltage value, indicated as second voltage value in order to distinguish it from said first voltage value at which the reference voltage $V_{BIAS}$ is set at the beginning of the reading cycles **R**. Obviously, in order to allow the transfer of charge in the direction defined above, the first voltage value must be lower than the voltage value present in the third charge accumulation element **103** for all the reading cycles **R** following one another and it must be lower than said second voltage value. Preferably, the latter is set at 3.3 V.

However, in different embodiments of the method of the invention said second voltage value may be set in a different manner.

Furthermore, it cannot be excluded that in a variant embodiment of the method of the invention for calculating the average arrival time the charge transfer for each reading cycle **R** in which a photon is detected may take place in the opposite direction, that is, from the circuit branch directly connected to the reference voltage value $V_{BIAS}$ to the third charge accumulation element **103**. In other words, in said variant embodiment the third charge accumulation element **103** is charged, for each reading cycle **R**, with a quantity of charge that depends on the arrival time of a photon on the photodiode **2**.

In any case, at the end of the exposure time **T**, at the level of said output pin **10** there is a voltage value $V_{CNT}$ related to the average value of the arrival time of the detected photons.

Finally, as for the counting method described above, preferably but not necessarily also the method of the invention for calculating the average arrival time includes a so-called "hard-reset" step which is carried out before said soft-reset step. In the hard-reset step, in particular, all the operations described above for the soft-reset step are performed, the only difference lying in that the reference voltage $V_{BIAS}$ is set to ground instead of being initialized at said second pre-established voltage value. In this way, the third charge accumulation element **103** is completely discharged.

Said hard-reset operation advantageously makes it possible to avoid the phenomenon called "lag" in technical jargon, that is, the reappearance of part of the image generated during the exposure time **T** that precedes the current time, in the case where only the soft-reset step is planned.

Going back to the architecture of the pixel **1** of the invention, independently of which one of the two management methods just described above is implemented, at the level of said output pin **10**, as already explained, it is possible to withdraw a voltage value $V_{CNT}$ related to the number of photons counted or to the average arrival time of a photon within the observation time window **OW**, at the end of said exposure time **T**.

According to the performance specifications and to the objects to be achieved with a sensor comprising said pixels **1**, said voltage values $V_{CNT}$ can be withdrawn and directly used in an analogue way or they can be converted into digital values before further processing them.

In the latter case, the output pin **10** of each pixel **1** must be connected, directly or indirectly, to electronic management means capable of performing said digital conversion.

In particular, in the case where the first management method for counting the number of photons incident on a single pixel **1** is implemented, according to the invention said electronic management means are electronic conversion means **200** configured, in fact, to carry out the self-referential conversion of the analogue voltage value $V_{CNT}$ into a digital value.

In other words, as shown in Figure 7, said electronic conversion means **200** comprise an input pin **201** suited to be operatively connected to the output pin **10** of at least one pixel **1.** Furthermore, the electronic conversion means **200** comprise a charge accumulation element **202** suited to store the output voltage value $V_{CNT}$ of said pixel **1.** Downstream of said charge accumulation element **202** there is an amplifier **203** provided with a feedback ring **204** in which electronic interruption means **205** are inserted, in such a way that when said electronic interruption means **205** are placed in the conduction state the amplifier **203** serves as a buffer amplifier, while when the same electronic interruption means **205** are inhibited the amplifier **203** serves as a comparator. Said feedback ring **204**, in particular, allows the output terminal **210** of the amplifier **203** to be connected to the inverting input of the same amplifier **203**. Finally, the electronic conversion means **200** comprise a latch device **206** with its enabling input **207** connected to the output **210** of the amplifier **203**. The second input **208** of said latch device **206** is connected to a meter **209** whose function is described here below.

The analogue-to-digital conversion method for converting the output voltage value $V_{CNT}$ of a pixel **1** includes the execution of a first step during which the electronic interruption means **205** are placed in the conduction state, so that the amplifier **203** works as a buffer amplifier and the charge accumulation element **202** is charged with said voltage $V_{CNT}$. In this way, the voltage value $V_{CNT}$ related to the number of photons counted is stored in the charge accumulation element **202**.

In a second step of the conversion method, the electronic interruption means **205** are successively switched over so as to inhibit them. During said second step, the amplifier **203** works as a comparator. Furthermore, said second step includes the resetting of the pixel **1** from which the output voltage value $V_{CNT}$ was previously withdrawn.

At this point the pixel **1** is managed according to a so-called "setting" mode, in order to simulate the detection of a photon for each reading cycle **R** carried out. In practice, said management is obtained applying the steps of the method of the invention for counting photons, except for the fact that, for each reading cycle **R**, the reference voltage value **VEB** is set so that it is equal to the extra bias voltage value $V_{EXC}$, rather than being set to ground. In this way, the photodiode (SPAD) **2** of the pixel **1** is deactivated, that is, it is not capable of generating an avalanche effect, but at the same time it is capable of maintaining, at the level of the second terminal **42** of the second electronic interruption means **4,** a voltage value equal to the voltage value that would result if a photon were detected by the same photodiode (**SPAD**) **2**. Therefore, the output voltage value $V_{CNT}$ of the pixel **1** delivered as an input to the second input of the amplifier/comparator **203** through the decoupling capacitor **202** tends to decrease at each reading cycle **R.** In addition to the above, at each reading cycle **R** there is also an increase in the input value of the latch device **206** counted by said meter **209**.

Thanks to this configuration of the signals delivered as inputs to the electronic conversion means **200**, the amplifier/comparator **203** will supply, at the level of the output terminal **210**, a signal with positive value as long as the voltage value $V_{CNT}$ stored in the charge accumulation element **202** is higher than the voltage value delivered to the second input of the amplifier **203**.

Said positive value enables the latch device **206** which receives, at the level of the second input **208**, the progressively increasing value counted by the meter **209**. At the moment when the output voltage value of the pixel **1** in the "setting" mode substantially reaches said voltage value $V_{CNT}$ stored in the charge accumulation element **202**, the output of the amplifier/comparator **203** changes state and assumes a negative value. Consequently, said negative value at the input of the latch device **206** inhibits the latter, which in turn stores in its output pin **211** the value counted by the meter **209** corresponding to the number of photons actually counted by the pixel **1**. In other words, the number of photons related to the voltage $V_{CNT}$ stored in the charge accumulation element **202** is determined, thus obtaining the digital conversion of said voltage value $V_{CNT}$. Since, as has just been explained above, said comparison signal, used to convert the output voltage value $V_{CNT}$ of a pixel **1** into the corresponding number of photons, is generated by the pixel **1** itself, an extremely precise analogue-to-digital conversion will advantageously be obtained, which will be exempt from any non-uniformities that may occur among the various pixels belonging to the same sensor.

Furthermore, the repeated use of the amplifier **203**, as buffer amplifier or as comparator, advantageously makes it possible to further reduce the size of the electronic components configured for managing the sensor.

The invention includes also the image sensor **300** for detecting one or more photons, represented in Figure 8. Said sensor **300** comprises, as already mentioned, a pixel matrix **301** and, furthermore, first and second electronic management means **302** and **303** operatively connected to said pixel matrix **301**. In particular, the first electronic management means **302** are configured to generate the signals for managing the pixel matrix **301**, in such a way as to implement the above mentioned "time gating" technique or the TAC technique. The second electronic management means **303** are, instead, configured so as to manage the signals generated by the pixel matrix **301**, in particular to carry out the analogue-to-digital conversion of the output voltage values $V_{CNT}$ of the pixel matrix itself. Preferably, said second electronic management means **303** are electronic conversion means **200** described above and schematically represented in Figure 7.

According to the invention, each one of the pixels belonging to said matrix **301** is a pixel **1** of the invention according to the description provided above.

Preferably, said pixels **1** of the matrix **301** are organized in rows and columns, wherein all the pixels **1** belonging to a single column have their output pins **10** operatively connected in parallel, through the buffer amplifier **8** and the sixth electronic interruption means **9,** to a column bitline **BL**, as can be observed in Figures 1 and 2 and in the detail shown in Figure 8.

In greater detail, the transfer of the voltage value $V_{CNT}$ available on said output pin **10** of each pixel **1** on the respective bitline **BL** takes place through the control signal **ROW** received through a control line **ROWL** that is common to all the pixels **1** belonging to the same row.

Finally, each column bitline **BL** is preferably connected to second electronic management means **303** of its own, in particular, to electronic conversion means **200** of its own.

According to the above, therefore, the improved pixel **1** that is the subject of the invention achieves all the set objects.

In particular, the invention achieves the object to provide a compact-size circuit architecture of a pixel for detecting and counting photons.

Consequently, the invention also achieves the object to provide a pixel for detecting and counting photons that makes it possible to increase the percentage fill-factor value related to the sensor in which said pixels are used. The invention also achieves the object to provide a pixel for detecting and counting photons that offers a more reliable and uniform count, independently of the intrinsic characteristics of the photodiode and of the analogue counting channel present in the same pixel.

Therefore, the invention also achieves the object to provide a pixel for detecting and counting photons that makes it possible to produce sensors capable of delivering uniform and reliable output signals.

The invention also achieves the further object to provide a pixel that makes it possible to count photons with shorter observation time windows (less than 1 ns) compared to the sensors known in the art.

The invention furthermore achieves the object to provide a pixel that serves several functions, based on the input management signals received.

Finally, the invention achieves the object to provide a pixel for detecting and counting photons that can contribute to reducing, if not completely eliminating, the non-linearity of the signals provided as an input to the electronic management means placed downstream of the pixel matrix, during the execution of the analogue-to-digital conversion.

**Claims**

1.  Circuit architecture of a pixel (1) for detecting and calculating the number of photons, **characterized in that** it comprises:

    - a photodiode (2) having a first contact terminal (21) connected to the first contact terminal (31) of first electronic interruption means (3) and the second contact terminal (22) connected to a first input pin (11) of said pixel (1) so as to receive an input bias voltage ($V_S$);
    - said first electronic interruption means (3) having the switch over control terminal (33) connected to a second input pin (12) so as to receive a first switch over control signal (SDRV) and the second contact terminal (32) connected to a third input pin (13) so as to receive a reference voltage value (VEB);
    - second electronic interruption means (4) having the first contact terminal (41) connected to a first charge accumulation element (101), the second contact terminal (42) connected to said first contact terminal (21) of said photodiode (2) and the switch over control terminal (43) connected to a fourth input pin (14) so as to receive a second switch over control signal (WIN);
    - third electronic interruption means (5) having the first contact terminal (51) connected to a fifth input pin (15) so as to receive a propagation signal (CNT) and the switch over control terminal (53) connected to said first charge accumulation element (101) so as to receive the voltage value ($V_{LATCH}$) present on said first charge accumulation element (101) as a switch over control signal;
    - fourth electronic interruption means (6) having the first contact terminal (61) connected to a third charge accumulation element (103) and to an output pin (10) for withdrawing the voltage value ($V_{CNT}$) present on said third charge accumulation element (103), the second contact terminal (62) connected to the first contact terminal (71) of fifth electronic interruption means (7) and to a second charge accumulation element (102) and the switch over control terminal (63) connected to the second contact terminal (52) of said third electronic interruption means (5) so as to receive a voltage value ($V_{PULSE}$) at the output of said second contact terminal (52) as a switch over control signal;
    - said fifth electronic interruption means (7) having the second contact terminal (72) connected to a sixth input pin (16) so as to receive a reference voltage value ($V_{BIAS}$) and the switch over control terminal (73) connected to a seventh input pin (17) so as to receive a third switch over control input signal (PRE).

2.  Pixel according to claim 1, **characterized in that** said photodiode (2) comprises a SPAD (Single Photon Avalanche Photodiode) (2), said first contact terminal (21) and said second contact terminal (22) of said photodiode (2) respectively corresponding to the anode (21) and cathode (22) of said SPAD (2).

3.  Pixel according to any of the preceding claims, **characterized in that** each one of said first, second, third, fourth and fifth electronic interruption means (3, 4, 5, 6, 7) respectively comprises a first, a second, a third, a fourth and a fifth transistor of the MOS type (3, 4, 5, 6, 7), said first contact terminal (31, 41, 51, 61, 71), said second contact terminal (32, 42, 52, 62, 72) and said switch over control terminal (33, 43, 53, 63, 73) of each one of said electronic interruption means (3, 4, 5, 6, 7) respectively corresponding to a first contact terminal (31, 41, 51, 61, 71), a second contact terminal (32, 42, 52, 62, 72) and the gate terminal (33, 43, 53, 63, 73) of each one of said MOS transistors (3, 4, 5, 6, 7).

4. Pixel according to claim 3, **characterized in that** each one of said first, second, third, fourth and fifth transistor of the MOS type (3, 4, 5, 6, 7) is a transistor of the nMOS type (3, 4, 5, 6, 7), said first contact terminal (31, 41, 51, 61, 71) and said second contact terminal (32, 42, 52, 62, 72) of each one of said MOS transistors (3, 4, 5, 6, 7) respectively corresponding to the drain terminal (31, 41, 51, 61, 71) and the source terminal (32, 42, 52, 62, 72) of each one of said nMOS transistors (3, 4, 5, 6, 7).

5. Pixel according to claim 3 or 4, **characterized in that:**

   - said first charge accumulation element (101) is defined by the gate capacity of said third MOS transistor (5);
   - said second charge accumulation element (102) comprises the parasitic capacity defined between said first contact terminal (71) of said fifth MOS transistor (7) and said second contact terminal (62) of said fourth MOS transistor (6);
   - said third charge accumulation element (103) comprises a capacitor of the MOS type (103).

6. Pixel (1) according to any of the preceding claims, **characterized in that** it comprises:

   - a buffer amplifier (8) interposed between said output pin (10) and a first contact terminal (91) of sixth electronic interruption means (9);
   - said sixth electronic interruption means (9) having the switch over control terminal (93) connected to a ninth input pin (19) so as to receive a fourth switch over control signal (ROW) and the second contact terminal (92) suited to be connected to an output bitline (BL).

7. Pixel (1) according to claim 6, **characterized in that** said sixth electronic interruption means (9) and said buffer amplifier (8) respectively comprise a sixth and a seventh transistor of the MOS type (9, 8), wherein:

   - a first contact terminal (81) of said seventh MOS transistor (8) is connected to an eighth input pin (18) so as to receive a power supply voltage ($V_{DD}$);
- the second contact terminal (82) of said seventh MOS transistor (8) is connected to said first contact terminal (91) of said sixth MOS transistor (9);
- the gate terminal (83) of said seventh MOS transistor (8) is connected to said output pin (10);
- said switch over control terminal (93) of said sixth electronic interruption means (9) corresponds to the gate terminal (93) of said sixth MOS transistor (9);
- said first contact terminal (91) and said second contact terminal (92) of said sixth electronic interruption means (9) respectively correspond to the first contact terminal (91) and the second contact terminal (92) of said sixth MOS transistor (9).

8. Pixel (1) according to claim 7, **characterized in that** said sixth and said seventh MOS transistors (9, 8) are transistors of the nMOS type (9, 8), said first contact terminal (91, 81) and said second contact terminal (92, 82) of each one of said sixth and seventh MOS transistors (9, 8) respectively corresponding to the drain terminal (91, 81) and the source terminal (92, 82) of said nMOS transistors (9, 8).

9. Method for managing a pixel of the type according to any of the preceding claims in order to calculate the number of photons incident on the sensitive surface of said pixel, **characterized in that** it comprises the following steps:

   - setting and maintaining, during the execution of said calculation, said input bias voltage ($V_S$) to said first input pin (11) at a value equal to the breakdown voltage ($V_{BD}$) of said photodiode (2) increased by a predefined extra bias voltage value ($V_{EXC}$);
   - including a sequence of reading cycles (R), each one of said reading cycles (R) comprising:

     - a first step a), during which the following operations are substantially performed simultaneously: enabling said second switch over control signal (WIN) in such a way as to place said second electronic interruption means (4) in the conduction state, setting said reference voltage value (VEB) at a voltage value substantially equal to said extra bias voltage value ($V_{EXC}$), enabling said first control signal (SDRV) in such a way as to disable the photodiode (2), disabling said propagation signal (CNT) on said fifth input pin (15) in such a way as to inhibit the conduction state of said fourth interruption means (6), enabling said third switch over control signal (PRE) on said seventh input pin (17) and setting said reference voltage value ($V_{BIAS}$) on said sixth input pin (16) at a first pre-established value in such a way as to precharge said second charge accumulation element (102) at said first reference voltage value ($V_{BIAS}$);
- a second step b), during which the following operations are substantially performed simultaneously: disabling said third switch over control signal (PRE) on said seventh input pin (15) in such a way as to inhibit said fifth interruption means (7) and disabling said first control signal (SDRV);
- a third step c), during which the following operations are substantially performed simultaneously: setting said reference voltage value (VEB) to ground and enabling said first control signal (SDRV) in such a way as to:

    - place said first electronic interruption means (3) in the conduction state;
    - reverse-biasing said photodiode (2) at said bias voltage ($V_S$) and opening the corresponding observation time window (OW);
    - discharging said first charge accumulation element (101);

- a fourth step d), during which said first switch over control signal (SDRV) is disabled in such a way as to insulate said anode (21) of said photodiode (2);
- a fifth step e), during which, after a pre-established time interval ($T_{OW}$) which corresponds to the duration of said observation time window (OW), said second switch over control signal (WIN) is disabled in such a way as to inhibit said second electronic interruption means (4) and consequently close said observation time window (OW);
- a sixth step f), during which said propagation signal (CNT) is enabled for a pre-established time interval ($T_{CNT}$).

10. Method according to claim 9, **characterized in that** before said reading cycles (R) it includes a soft-reset step comprising the following operations:

    - enabling said first switch over control signal (SDRV) and setting said reference voltage value (VEB) at a voltage value substantially equal to said extra bias voltage value ($V_{EXC}$) in such a way as to disable said photodiode (2);
    - enabling said second switch over control signal (WIN), said third switch over control signal (PRE) and said propagation signal (CNT) and setting said reference voltage value ($V_{BIAS}$) at a second pre-established voltage value in such a way as to precharge said third charge accumulation element (103) at said second pre-established voltage value.

11. Method according to claim 10, **characterized in that** before said soft-reset step it includes a hard-reset step comprising the following operations:

    - enabling said first switch over control signal (SDRV) and setting said reference voltage value (VEB) at a voltage value substantially equal to said extra bias voltage value ($V_{EXC}$) in such a way as to disable said photodiode (2);
    - enabling said second switch over control signal (WIN), said third switch over control signal (PRE) and said propagation signal (CNT) and setting said reference voltage value ($V_{BIAS}$) to ground in such a way as to discharge said second charge accumulation element (102) and said third charge accumulation element (103).

12. Method according to any of the claims from 9 to 11 for managing a pixel of the type according to claim 3 or to any of the claims from 4 to 8 in combination with claim 3, **characterized in that:**

    - said second switch over control signal (WIN) is set at such a voltage value that:

$$WIN - V_{TH1} <= V_{EXC},$$

    where $V_{TH1}$ represents the threshold voltage value of said second MOS transistor (4);
    - said propagation signal (CNT), when enabled, is set at such a voltage value that:

$$CNT <= WIN - V_{TH2},$$

    where $V_{TH2}$ is the threshold voltage of said third MOS transistor (5).

13. Method for managing a pixel of the type according to any of the claims from 1 to 8 to calculate the average arrival time of a photon within the observation time window (OW) in a sequence of reading cycles (R), **characterized in that** it includes the following steps:

    - setting and maintaining, during the execution of said calculation, said input bias voltage ($V_S$) to said first input pin (11) at a value equal to the breakdown voltage ($V_{BD}$) of said photodiode (2) increased by a predefined extra bias voltage value (V$_{EXC}$);
- enabling said second switch over control signal (WIN) and maintaining it enabled during the execution of said calculation, in such a way as to place said second electronic interruption means (4) in the conduction state;
- enabling said third switch over control signal (PRE) on said seventh input pin (17) and maintaining it enabled;
- planning for each one of said reading cycles (R):

- a first step a), during which the following operations are substantially performed simultaneously: setting said reference voltage value (V$_{BIAS}$) on said sixth input pin (16) at a first pre-established value, setting said reference voltage value (VEB) to ground and enabling said first switch over control signal (SDRV) in such a way as to place said first electronic interruption means (3) in the conduction state, reverse-biasing said photodiode (2) at said bias voltage (V$_S$), opening the corresponding observation time window (OW) and discharging said first charge accumulation element (101);
- a second step b), following said first step a), during which the following operations are substantially performed simultaneously: disabling said first switch over control signal (SDRV) and enabling said propagation signal (CNT);
- a third step c), during which, after a pre-established time interval (T$_{OW}$) which corresponds to the duration of said observation time window (OW), said propagation signal (CNT) is disabled in such a way as to inhibit said fourth electronic interruption means (6) and close said observation time window (OW).

14. Method according to claim 13, **characterized in that** before said reading cycles (R) it includes a soft-reset step comprising the following operations:

- enabling said first switch over control signal (SDRV) and setting said reference voltage value (VEB) at a voltage value substantially equal to said extra bias voltage value (V$_{EXC}$) in such a way as to disable said photodiode (2);
- enabling said propagation signal (CNT) and setting said reference voltage value (V$_{BIAS}$) at a second pre-established voltage value in such a way as to precharge said third charge accumulation element (103) at said pre-established second voltage value.

15. Method according to claim 14, **characterized in that** before said soft-reset step it includes a hard-reset step comprising the following operations:

- enabling said first switch over control signal (SDRV) and setting said reference voltage value (VEB) at a voltage value substantially equal to said extra bias voltage value (V$_{EXC}$) in such a way as to disable said photodiode (2);
- enabling said propagation signal (CNT) and setting said reference voltage value (V$_{BIAS}$) to ground in such a way as to discharge said third charge accumulation element (103).

16. Image sensor (300) for detecting one or more photons, of the type comprising a pixel matrix (301), first and second electronic management means (302, 303) operatively connected to said pixel matrix (301), said first electronic management means (302) being configured to generate signals for managing said pixel matrix (301) and said second electronic management means (303) being configured to manage the output signals of said pixel matrix (301), **characterized in that** each one of said pixels of said matrix (301) is a pixel (1) of the type according to any of the claims from 1 to 8.

**Patentansprüche**

1. Schaltungsarchitektur eines Pixels (1) zur Erfassung und Berechnung der Anzahl Photonen, **dadurch gekennzeichnet, dass** sie Folgendes umfasst:

- eine Photodiode (2) mit einem ersten Kontaktanschluss (21), der mit dem ersten Kontaktanschluss (31) erster elektronischer Unterbrechungsmittel (3) verbunden ist und mit einem zweiten Kontaktanschluss (22), der an einen ersten Eingangspin (11) des besagten Pixels (1) angeschlossen ist, um eine Bias-Eingangsspannung (V$_S$) zu empfangen;
- wobei der Umschalt-Steueranschluss (33) der besagtem ersten elektronischen Unterbrechungsmittel (3) an einem zweiten Eingangspin (12) angeschlossen ist, um ein erstes Umschalt-Steuersignal (SDRV) zu empfangen, und der zweite Kontaktanschluss (32) an einen dritten Eingangspin (13) angeschlossen ist, um einen Bezugsspannungswert (VEB) zu empfangen;
- zweite elektronische Unterbrechungsmittel (4), deren erster Kontaktanschluss (41) an ein erstes Ladungsspeicherelement (101) und deren zweiter Kontaktanschluss (42) an den besagten ersten Kontaktanschluss (21) der besagten Photodiode (2) angeschlossen ist und deren Umschalt-Steueranschluss (43) an einen vierten Eingangspin (14) angeschlossen ist, um ein zweites Umschalt-Steuersignal (WIN) zu empfangen;

- dritte elektronische Unterbrechungsmittel (5), deren erster Kontaktanschluss (51) an einen fünften Eingangspin (15) angeschlossen ist, um ein Ausbreitungssignal (CNT) zu empfangen, und deren Umschalt-Steueranschluss (53) an das besagte erste Ladungsspeicherelement (101) angeschlossen ist, um den am ersten Ladungsspeicherelement (101) anliegenden Spannungswert ($V_{LATCH}$) als Umschalt-Steuersignal zu empfangen;

- vierte elektronische Unterbrechungsmittel (6), deren erster Kontaktanschluss (61) an ein drittes Ladungsspeicherelement (103) angeschlossen ist sowie an einen Ausgangspin (10) zur Entnahme des Spannungswerts ($V_{CNT}$), der an dem besagten dritten Ladungsspeicherelement (103) anliegt, wobei der zweite Kontaktanschluss (62) an den ersten Kontaktanschluss (71) der fünften elektronischen Unterbrechungsmittel (7) und an einen zweiten Ladungsspeicherelement (102) angeschlossen ist und der Umschalt-Steueranschluss (63) an den zweiten Kontaktanschluss (52) der besagten dritten elektronischen Unterbrechungsmittel (5) angeschlossen ist, um einen Spannungswert ($V_{PULSE}$) am Ausgang des besagten zweiten Kontaktanschlusses (52) als Umschalt-Steuersignal zu empfangen;

- wobei der zweite Kontaktanschluss (72) der besagten fünften elektronischen Unterbrechungsmittel (7) an einem sechsten Eingangspin (16) angeschlossen ist, um einen Bezugsspannungswert ($V_{BIAS}$) zu empfangen, und der Umschalt-Steueranschluss (73) an einem siebten Eingangspin (17) angeschlossen ist, um ein drittes Umschalt-Steuereingangssignal (PRE) zu empfangen.

2. Pixel nach Patentanspruch 1, **dadurch gekennzeichnet, dass** die besagte Photodiode (2) eine SPAD (Einzelphoton-Avalanche-Diode) (2) umfasst, wobei der besagte erste Kontaktanschluss (21) und der besagte zweite Kontaktanschluss (22) der besagten Photodiode (2) jeweils der Anode (21) und der Katode (22) der besagten SPAD (2) entsprechen.

3. Pixel nach einem jeden der vorstehenden Patentansprüche, **dadurch gekennzeichnet, dass** jede der besagten ersten, zweiten, dritten, vierten und fünften elektronischen Unterbrechungsmittel (3, 4, 5, 6, 7) jeweils einen ersten, zweiten, dritten, vierten und fünften Transistor vom MOS-Typ (3, 4, 5, 6, 7) umfassen, wobei der besagte erste Kontaktanschluss (31, 41, 51, 61, 71), der besagte zweite Kontaktanschluss (32, 42, 52, 62, 72) und der besagte Umschalt-Steueranschluss (33, 43, 53, 63, 73) jedes der besagten elektronischen Unterbrechungsmittel (3, 4, 5, 6, 7) jeweils einem ersten Kontaktanschluss (31, 41, 51, 61, 71), einem zweiten Kontaktanschluss (32, 42, 52, 62, 72) und dem Gate-Anschluss (33, 43, 53, 63, 73) jedes der besagten MOS-Transistoren (3, 4, 5, 6, 7) entsprechen.

4. Pixel nach Patentanspruch 3, **dadurch gekennzeichnet, dass** jeder der besagten ersten, zweiten, dritten, vierten und fünften Transistoren vom MOS-Typ (3, 4, 5, 6, 7) ein Transistor vom nMOS-Typ (3, 4, 5, 6, 7) ist, wobei der besagte erste Kontaktanschluss (31, 41, 51, 61, 71) und der besagte zweite Kontaktanschluss (32, 42, 52, 62, 72) jedes der besagten MOS Transistoren (3, 4, 5, 6, 7) jeweils dem Drain-Anschluss (31, 41, 51, 61, 71) und dem Source-Anschluss (32, 42, 52, 62, 72) jedes der besagten nMOS Transistoren (3, 4, 5, 6, 7) entsprechen.

5. Pixel nach Patentanspruch 3 oder 4, **dadurch gekennzeichnet, dass:**

- das besagte erste Ladungsspeicherelement (101) durch die Gate-Kapazität des besagten dritten MOS-Transistors (5) definiert ist;
- das besagte zweite Ladungsspeicherelement (102) die parasitische Kapazität umfasst, die zwischen dem besagten ersten Kontaktanschluss (71) des besagten fünften MOS Transistors (7) und dem besagten zweiten Kontaktanschluss (62) des besagten vierten MOS Transistors (6) definiert ist;
- das besagte dritte Ladungsspeicherelement (103) einen Kondensator vom MOS-Typ (103) umfasst.

6. Pixel (1) nach einem jeden der vorstehenden Patentansprüche, **dadurch gekennzeichnet, dass** es Folgendes umfasst:

- einen Pufferverstärker (8), der zwischen dem besagten Ausgangspin (10) und einem ersten Kontaktanschluss (91) der sechsten elektronischen Unterbrechungsmittel (9) eingefügt ist;
- wobei der Umschalt-Steueranschluss (93) der besagten sechsten elektronischen Unterbrechungsmittel (9) an einen neunten Eingangspin (19) angeschlossen ist, um ein viertes Umschalt-Steuersignal (ROW) zu empfangen, und der zweite Kontaktanschluss (92) geeignet ist, an eine Ausgangs-Bitlinie (BL) angeschlossen zu werden.

7. Pixel (1) nach Patentanspruch 6, **dadurch gekennzeichnet, dass** die besagten sechsten elektronischen Unterbrechungsmittel (9) und der besagte Pufferverstärker (8) jeweils einen sechsten und einen siebten Transistor vom MOS-Typ (9, 8) umfassen, in dem:

- ein erster Kontaktanschluss (81) des besagten siebten MOS-Transistors (8) an einen achten Eingangspin (18) angeschlossen ist, um eine Stromversorgungsspannung ($V_{DD}$) zu empfangen;
- der zweite Kontaktanschluss (82) des besagten siebten MOS-Transistors (8) an den besagten ersten Kontaktanschluss (91) des besagten sechsten MOS Transistors (9) angeschlossen ist;
- der Gate-Anschluss (83) des besagten siebten MOS-Transistors (8) an den besagten Ausgangspin (10) angeschlossen ist;
- der besagte Umschalt-Steueranschluss (93) der besagten sechsten elektronischen Unterbrechungsmittel (9) dem Gate-Anschluss (93) des besagten sechsten MOS-Transistors (9) entspricht;
- der besagte erste Kontaktanschluss (91) und der besagte zweite Kontaktanschluss (92) der besagten sechsten elektronischen Unterbrechungsmittel (9) jeweils dem ersten Kontaktanschluss (91) und dem zweiten Kontaktanschluss (92) des besagten sechsten MOS-Transistors (9) entsprechen.

8. Pixel (1) nach Patentanspruch 7, **dadurch gekennzeichnet, dass** der besagte sechste und der besagte siebte MOS-Transistor (9, 8) Transistoren vom nMOS-Typ (9, 8) sind, wobei der besagte erste Kontaktanschluss (91, 81) und der besagte zweite Kontaktanschluss (92, 82) sowohl des besagten sechsten als auch des besagten siebten MOS-Transistors (9, 8) jeweils dem Drain-Anschluss (91, 81) und dem Source-Anschluss (92, 82) des besagten nMOS-Transistors (9, 8) entsprechen.

9. Verfahren zur Steuerung eines Pixels des Typs, der einem jeden der vorstehenden Patentansprüche entspricht, um die Anzahl Photonen zu berechnen, die auf die empfindliche Oberfläche des besagten Pixels einfallen, **dadurch gekennzeichnet, dass** es folgende Schritte umfasst:

- Einstellung und Erhalt, während der Ausführung der besagten Berechnung, der besagten Bias-Eingangsspannung ($V_S$) an dem besagten ersten Eingangspin (11) auf einem Wert, der gleich der Durchbruchspannung ($V_{BD}$) der besagten Photodiode (2) ist, erhöht um einen vorbestimmten Zusatz-Bias-Spannungswert ($V_{EXC}$);
- Einschluss einer Sequenz von Lesezyklen (R), wobei jeder der besagten Lesezyklen (R) Folgendes umfasst:

- einen ersten Schritt a), während dessen folgende Vorgänge im Wesentlichen gleichzeitig ausgeführt werden: Freigabe des besagten zweiten Umschalt-Steuersignals (WIN), so dass die besagten zweiten elektronischen Unterbrechungsmittel (4) in den Leitungszustand versetzt werden, wobei der besagte Bezugsspannungswert (VEB) auf einen Spannungswert gesetzt wird, der im Wesentlichen gleich dem besagten Zusatz-Bias-Spannungswert ($V_{EXC}$) ist, unter Freigabe des besagten ersten Steuersignals (SDRV), so dass die Photodiode (2) deaktiviert wird, Deaktivierung des besagten Ausbreitungssignals (CNT) an dem besagten fünften Eingangspin (15), so dass der Leitungszustand der besagten vierten Unterbrechungsmittel (6) gesperrt wird, Freigabe des besagten dritten Umschalt-Steuersignals (PRE) an dem besagten siebten Eingangspin (17) und Einstellung des besagten Bezugsspannungswerts ($V_{BIAS}$) an dem besagten sechsten Eingangspin (16) auf einen ersten, vorbestimmten Wert, so dass das besagte zweite Ladungsspeicherelement (102) auf den besagten ersten Bezugsspannungswert ($V_{BIAS}$) vorgeladen wird;
- einen zweiten Schritt b), während dessen folgende Vorgänge im Wesentlichen gleichzeitig ausgeführt werden: Deaktivierung des besagten dritten Umschalt-Steuersignals (PRE) an dem besagten siebten Eingangspin (15), so dass die besagten fünften Unterbrechungsmittel (7) gesperrt werden und Deaktivierung des besagten ersten Steuersignal (SDRV);
- einen dritten Schritt c), während dessen folgende Vorgänge im Wesentlichen gleichzeitig ausgeführt werden: Einstellung des besagten Bezugsspannungswerts (VEB) auf Erdung und Freigabe des besagten ersten Steuersignals (SDRV), so dass Folgendes stattfindet:

- Versetzung der besagten ersten elektronischen Unterbrechungsmittel (3) in den Leitungszustand;
- Vorspannung in Sperrichtung der besagten Photodiode (2) mit der besagten Bias-Spannung ($V_S$) und Öffnung des entsprechenden Beobachtungs-Zeitfensters (OW);
- Entladen des besagten ersten Ladungsspeicherelements (101);

- einen vierten Schritt d), während dessen das besagte erste Umschalt-Steuersignal (SDRV) deaktiviert ist, so dass die besagte Anode (21) der besagten Photodiode (2) isoliert wird;
- einen fünften Schritt e), während dessen nach einem vorbestimmten Zeitintervall ($T_{OW}$), das der Dauer des besagten Beobachtungs-Zeitfensters (OW) entspricht, das besagte zweite Umschalt-Steuersignal (WIN) deaktiviert ist, so dass die besagten zweiten elektronischen Unterbrechungsmittel (4) gesperrt werden und folglich das besagte Beobachtungs-Zeitfenster (OW) geschlossen wird;
- einen sechsten Schritt f), während dessen das besagte Ausbreitungssignal (CNT) für ein vorbestimmtes Zeitintervall ($T_{CNT}$) aktiviert ist.

10. Verfahren nach Patentanspruch 9, **dadurch gekennzeichnet, dass** es vor den besagten Lesezyklen (R) einen Soft-Reset-Schritt mit folgenden Vorgängen umfasst:

- Freigabe des besagten ersten Umschalt-Steuersignals (SDRV) und Einstellung des besagten Bezugsspannungswerts (VEB) auf einen Spannungswert, der im Wesentlichen gleich dem besagten Zusatz-Bias-Spannungswert ($V_{EXC}$) ist, so dass die besagte Photodiode (2) deaktiviert wird;
- Freigabe des besagten zweiten Umschalt-Steuersignals (WIN), des besagten dritten Umschalt-Steuersignals (PRE) und des besagten Ausbreitungssignals (CNT) und Einstellung des besagten Bezugsspannungswerts ($V_{BIAS}$) auf einen zweiten, vorbestimmten Spannungswert, so dass das besagte dritte Ladungsspeicherelement (103) auf den besagten zweiten, vorbestimmten Spannungswert vorgeladen wird.

11. Verfahren nach Patentanspruch 10, **dadurch gekennzeichnet, dass** es vor dem besagten Soft-Reset-Schritt einen Hard-Reset-Schritt mit folgenden Vorgängen umfasst:

- Freigabe des besagten ersten Umschalt-Steuersignals (SDRV) und Einstellung des besagten Bezugsspannungswerts (VEB) auf einen Spannungswert, der im Wesentlichen gleich dem besagten Zusatz-Bias-Spannungswert ($V_{EXC}$) ist, so dass die besagte Photodiode (2) deaktiviert wird;
- Freigabe des besagten zweiten Umschalt-Steuersignals (WIN), des besagten dritten Umschalt-Steuersignals (PRE) und des besagten Ausbreitungssignals (CNT) und Einstellung des besagten Bezugsspannungswerts ($V_{BIAS}$) auf Erdung, so dass das besagte zweite Ladungsspeicherelement (102) und das besagte dritte Ladungsspeicherelement (103) entladen werden.

12. Verfahren nach einem jeglichen der Patentansprüche von 9 bis 11 zur Steuerung eines Pixels des Typs nach Patentanspruch 3 oder nach einem jeglichen der Patentansprüche von 4 bis 8 in Kombination mit Patentanspruch 3, **dadurch gekennzeichnet, dass:**

- das besagte zweiten Umschalt-Steuersignal (WIN) auf einen solchen Spannungswert eingestellt ist, dass:

$$WIN - V_{TH1} <= V_{EXC},$$

wobei $V_{TH1}$ der Schwellenspannungswert des besagten zweiten MOS-Transistors (4) ist;
- das besagte Ausbreitungssignal (CNT), falls freigegeben, auf einen solchen Spannungswert eingestellt ist, dass:

$$CNT <= WIN - V_{TH2},$$

wobei $V_{TH2}$ die Schwellenspannung des besagten dritten MOS-Transistors (5) ist.

13. Verfahren zur Steuerung eines Pixels des Typs, der einem jeglichen der vorstehenden Patentansprüche von 1 bis 8 entspricht, um die durchschnittliche Ankunftszeit eines Photons innerhalb des Beobachtungs-Zeitfensters (OW) in einer Folge von Lesezyklen (R) zu berechnen, **dadurch gekennzeichnet, dass** es folgende Schritte umfasst:

- Einstellung und Erhalt, während der Ausführung der besagten Berechnung, der besagten Bias-Eingangsspannung ($V_S$) an dem besagten ersten Eingangspin (11) auf einem Wert, der gleich der Durchbruchspannung ($V_{BD}$) der besagten Photodiode (2) ist, erhöht um einen vorbestimmten Zusatz-Bias-Spannungswert ($V_{EXC}$);
- Freigabe des besagten zweiten Umschalt-Steuersignals (WIN) und Erhalt seiner Freigabe während der Ausführung der besagten Berechnung derart, dass die besagten zweiten elektronischen Unterbrechungsmittel (4) in den Leitungszustand versetzt werden;
- Freigabe des besagten dritten Umschalt-Steuersignal (PRE) an dem besagten siebten Eingangspin (17) und Erhalt seiner Freigabe;
- Planung für jeden der besagten Lesezyklen (R) von:

- einem ersten Schritt a), während dessen folgende Vorgänge im Wesentlichen gleichzeitig ausgeführt werden: Einstellung des besagten Bezugsspannungswerts ($V_{BIAS}$) an dem besagten sechsten Eingangspin (16) auf einen ersten, vorbestimmten Wert, Einstellung des besagten Bezugsspannungswerts (VEB) auf Erdung und Freigabe des besagten ersten Umschalt-Steuersignals (SDRV), so dass die besagten ersten elektronischen Unterbrechungsmittel (3) in den Leitungszustand versetzt werden, Vorspannung in Sperrichtung der besagten Photodiode (2) mit der besagten Bias-Spannung ($V_S$), Öffnung des entsprechenden Beobachtungs-Zeitfensters (OW) und Entladen des besagten ersten Ladungsspeicherelements (101);

- einen auf den besagten ersten Schritt a) folgenden, zweiten Schritt b), während dessen folgende Vorgänge im Wesentlichen gleichzeitig ausgeführt werden: Deaktivierung des besagten ersten Umschalt-Steuersignals (SDRV) und Freigabe des besagten Ausbreitungssignals (CNT);

- einen dritten Schritt c), während dessen nach einem vorbestimmten Zeitintervall ($T_{OW}$), das der Dauer des besagten Beobachtungs-Zeitfensters (OW) entspricht, das besagte Ausbreitungssignal (CNT) deaktiviert ist, so dass die besagten vierten elektronischen Unterbrechungsmittel (6) gesperrt werden und das besagte Beobachtungs-Zeitfenster (OW) geschlossen wird.

**14.** Verfahren nach Patentanspruch 13, **dadurch gekennzeichnet, dass** es vor den besagten Lesezyklen (R) einen Soft-Reset-Schritt mit folgenden Vorgängen umfasst:

- Freigabe des besagten ersten Umschalt-Steuersignals (SDRV) und Einstellung des besagten Bezugsspannungswerts (VEB) auf einen Spannungswert, der im Wesentlichen gleich dem besagten Zusatz-Bias-Spannungswert ($V_{EXC}$) ist, so dass die besagte Photodiode (2) deaktiviert wird;

- Freigabe des besagten Ausbreitungssignals (CNT) und Einstellung des besagten Bezugsspannungswerts ($V_{BIAS}$) auf einen zweiten, vorbestimmten Spannungswert derart, dass das besagte dritte Ladungsspeicherelement (103) auf den besagten zweiten, vorbestimmten Spannungswert vorgeladen wird.

**15.** Verfahren nach Patentanspruch 14, **dadurch gekennzeichnet, dass** es vor dem besagten Soft-Reset-Schritt einen Hard-Reset-Schritt mit folgenden Vorgängen umfasst:

- Freigabe des besagten ersten Umschalt-Steuersignals (SDRV) und Einstellung des besagten Bezugsspannungswerts (VEB) auf einen Spannungswert, der im Wesentlichen gleich dem besagten Zusatz-Bias-Spannungswert ($V_{EXC}$) ist, so dass die besagte Photodiode (2) deaktiviert wird;

- Freigabe des besagten Ausbreitungssignals (CNT) und Einstellung des besagten Bezugsspannungswerts ($V_{BIAS}$) auf Erdung, so dass das besagte dritte Ladungsspeicherelement (103) entladen wird.

**16.** Bildsensor (300) zur Erfassung von einem oder mehreren Photonen, des Typs, der eine Pixelmatrix (301) sowie erste und zweite elektronische, operativ mit der besagten Pixelmatrix (301) verbundene Steuermittel (302, 303) umfasst, wobei die besagten ersten elektronischen Steuermittel (302) so konfiguriert sind, dass sie Signale zur Steuerung der besagten Pixelmatrix (301) generieren und die besagten zweiten elektronischen Steuermittel (303) so konfiguriert sind, dass sie die Ausgabesignale besagten Pixelmatrix (301) steuern, **dadurch gekennzeichnet, dass** jedes der besagten Pixel der besagten Matrix (301) ein Pixel (1) des Typs nach einem jeglichen der Patentansprüche von 1 bis 8 ist.

## Revendications

**1.** Architecture de circuit d'un pixel (1) pour la détection et le comptage du nombre de photons, **caractérisée en ce qu'**elle comprend:

- une photodiode (2) qui présente une première borne de contact (21) reliée à la première borne de contact (31) de premiers moyens électroniques d'interruption (3) et la deuxième borne de contact (22) reliée à une première broche d'entrée (11) dudit pixel (1) de manière à recevoir une tension de polarisation ($V_S$) à l'entrée;

- lesdits premiers moyens électroniques d'interruption (3) qui présentent la borne de contrôle de la commutation (33) reliée à une deuxième broche d'entrée (12) de manière à recevoir un premier signal de contrôle de la commutation (SDRV) et la deuxième borne de contact (32) reliée à une troisième broche d'entrée (13) de manière à recevoir une valeur de tension de référence (VEB);

- de deuxièmes moyens électroniques d'interruption (4) qui présentent la première borne de contact (41) reliée à un premier élément d'accumulation de charge (101), la deuxième borne de contact (42) reliée à ladite première borne de contact (21) de ladite photodiode (2) et la borne de contrôle de la commutation (43) reliée à une quatrième broche d'entrée (14) de manière à recevoir un deuxième signal de contrôle de la commutation (WIN);

- de troisièmes moyens électroniques d'interruption (5) qui présentent la première borne de contact (51) reliée à une cinquième broche d'entrée (15) de manière à recevoir un signal de propagation (CNT) et la borne de contrôle de la commutation (53) reliée audit premier élément d'accumulation de charge (101) de manière à recevoir comme signal de contrôle de la commutation la valeur de tension ($V_{LATCH}$) présente sur ledit premier élément d'accumulation de charge (101);

- de quatrièmes moyens électroniques d'interruption (6) qui présentent la première borne de contact (61) reliée à un troisième élément d'accumulation de charge (103) et une broche de sortie (10) pour prélever la valeur de tension ($V_{CNT}$) présente sur ledit troisième élément d'accumulation de charge (103), la deuxième borne de contact (62) reliée à la première borne de contact (71) de cinquièmes moyens électroniques d'interruption (7) et à un deuxième élément d'accumulation de charge (102) et la borne de contrôle de la commutation (63) reliée à la deuxième borne de contact (52) desdits troisièmes moyens électroniques d'interruption (5) de manière à recevoir comme signal de contrôle de la commutation une valeur de tension ($V_{PULSE}$) à la sortie de ladite deuxième borne de contact (52);

- lesdits cinquièmes moyens électroniques d'interruption (7) qui présentent la deuxième borne de contact (72) reliée à une sixième broche d'entrée (16) de manière à recevoir une valeur de tension de référence ($V_{BIAS}$) et la borne de contrôle de la commutation (73) reliée à une septième broche d'entrée (17) de manière à recevoir un troisième signal de contrôle de la commutation (PRE) à l'entrée.

2. Pixel selon la revendication 1, **caractérisé en ce que** ladite photodiode (2) comprend une SPAD (Single Photon Avalanche Photodiode) (2), ladite première borne de contact (21) et ladite deuxième borne de contact (22) de ladite photodiode (2) correspondant respectivement à l'anode (21) et à la cathode (22) de ladite SPAD (2).

3. Pixel selon l'une quelconque des revendications précédentes, **caractérisé en ce que** chacun desdits premiers, deuxièmes, troisièmes, quatrièmes et cinquièmes moyens électroniques d'interruption (3, 4, 5, 6, 7) comprend respectivement un premier, un deuxième, un troisième, un quatrième et un cinquième transistor du type MOS (3, 4, 5, 6, 7), ladite première borne de contact (31, 41, 51, 61, 71), ladite deuxième borne de contact (32, 42, 52, 62, 72) et ladite borne de contrôle de la commutation (33, 43, 53, 63, 73) de chacun desdits moyens électroniques d'interruption (3, 4, 5, 6, 7) correspondant respectivement à une première borne de contact (31, 41, 51, 61, 71), à une deuxième borne de contact (32, 42, 52, 62, 72) et à la borne de gate (33, 43, 53, 63, 73) de chacun desdits transistors MOS (3, 4, 5, 6, 7).

4. Pixel selon la revendication 3, **caractérisé en ce que** chacun desdits premier, deuxième, troisième, quatrième et cinquième transistors du type MOS (3, 4, 5, 6, 7) est un transistor du type nMOS (3, 4, 5, 6, 7), ladite première borne de contact (31, 41, 51, 61, 71) et ladite deuxième borne de contact (32, 42, 52, 62, 72) de chacun desdits transistors MOS (3, 4, 5, 6, 7) correspondant respectivement à la borne de drain (31, 41, 51, 61, 71) et à la borne de source (32, 42, 52, 62, 72) de chacun desdits transistors nMOS (3, 4, 5, 6, 7).

5. Pixel selon la revendication 3 ou 4, **caractérisé en ce que:**

   - ledit premier élément d'accumulation de charge (101) est défini par la capacité de gate dudit troisième transistor MOS (5);
   - ledit deuxième élément d'accumulation de charge (102) comprend la capacité parasite définie entre ladite première borne de contact (71) dudit cinquième transistor MOS (7) et ladite deuxième borne de contact (62) dudit quatrième transistor MOS (6);
   - ledit troisième élément d'accumulation de charge (103) comprend un condensateur du type MOS (103).

6. Pixel (1) selon l'une quelconque des revendications précédentes, **caractérisé en ce qu'**il comprend:

   - un amplificateur de tension (8) interposé entre ladite broche de sortie (10) et une première borne de contact (91) de sixièmes moyens électroniques d'interruption (9);
   - lesdits sixièmes moyens électroniques d'interruption (9) qui présentent la borne de contrôle de la commutation (93) reliée à une neuvième broche d'entrée (19) de manière à recevoir un quatrième signal de contrôle de la commutation (ROW) et la deuxième borne de contact (92) apte à être reliée à une ligne de bits de sortie (BL).

7. Pixel (1) selon la revendication 6, **caractérisé en ce que** lesdits sixièmes moyens électroniques d'interruption (9) et ledit amplificateur de tension (8) comprennent respectivement un sixième transistor et un septième transistor du type MOS (9, 8), où:

- une première borne de contact (81) dudit septième transistor MOS (8) est reliée à une huitième broche d'entrée (18) de manière à recevoir une tension d'alimentation ($V_{DD}$);
- la deuxième borne de contact (82) dudit septième transistor MOS (8) est reliée à ladite première borne de contact (91) dudit sixième transistor MOS (9);
- la borne de gate (83) dudit septième transistor MOS (8) est reliée à ladite broche de sortie (10);
- ladite borne de contrôle de la commutation (93) desdits sixièmes moyens électroniques d'interruption (9) correspond à la borne de gate (93) dudit sixième transistor MOS (9);
- ladite première borne de contact (91) et ladite deuxième borne de contact (92) desdits sixièmes moyens électroniques d'interruption (9) correspondent respectivement à la première borne de contact (91) et à la deuxième borne de contact (92) dudit sixième transistor MOS (9).

8. Pixel (1) selon la revendication 7, **caractérisé en ce que** ledit sixième et ledit septième transistors MOS (9, 8) sont des transistors du type nMOS (9, 8), ladite première borne de contact (91, 81) et ladite deuxième borne de contact (92, 82) de chacun desdits sixième et septième transistors MOS (9, 8) correspondant respectivement à la borne de drain (91, 81) et à la borne de source (92, 82) desdits transistors nMOS (9, 8).

9. Méthode de gestion d'un pixel du type selon l'une quelconque des revendications précédentes pour exécuter le comptage du nombre de photons incidents sur la surface sensible dudit pixel, **caractérisée en ce qu'**elle comprend les phases suivantes:

- régler et maintenir, durant l'exécution dudit comptage, ladite tension de polarisation ($V_S$) à l'entrée à ladite première broche d'entrée (11) à une valeur égale à la tension de claquage ($V_{BD}$) de ladite photodiode (2) augmentée d'une valeur de tension d'extra polarisation ($V_{EXC}$) prédéfinie;
- prévoir une séquence de cycles de lecture (R), chacun desdits cycles de lecture (R) comprenant:

- une première phase a) qui prévoir d'exécuter essentiellement en même temps les opérations suivantes d'autorisation dudit deuxième signal de contrôle de la commutation (WIN), de manière à mettre lesdits deuxièmes moyens électroniques d'interruption (4) à l'état de conduction, de fixation de ladite valeur de référence de tension (VEB) à une valeur de tension essentiellement égale à la valeur de ladite tension d'extra polarisation ($V_{EXC}$), d'autorisation dudit premier signal de contrôle (SDRV), de manière à désactiver la photodiode (2), de désactivation dudit signal de propagation (CNT) sur ladite cinquième broche d'entrée (15) de manière à empêcher l'état de conduction desdits quatrièmes moyens d'interruption (6), d'autorisation dudit troisième signal de contrôle de la commutation (PRE) sur ladite septième broche d'entrée (17) et de fixation de ladite valeur de référence de tension ($V_{BIAS}$) sur ladite sixième broche d'entrée (16) à une première valeur préétablie de manière à pré-charger ledit deuxième élément d'accumulation de charge (102) à ladite première valeur de référence de tension ($V_{BIAS}$);
- une deuxième phase b) qui prévoit d'exécuter essentiellement en même temps les opérations suivantes de désactivation dudit troisième signal de contrôle de la commutation (PRE) sur ladite septième broche d'entrée (15) de manière à empêcher lesdits cinquièmes moyens d'interruption (7) et de désactivation dudit premier signal de contrôle (SDRV);
- une troisième phase c) qui prévoit d'exécuter essentiellement en même temps les opérations suivantes de fixation de ladite valeur de référence de tension (VEB) à la masse et d'autorisation dudit premier signal de contrôle (SDRV) de manière à:

- mettre lesdits premiers moyens électroniques d'interruption (3) à l'état de conduction;
- polariser inversement ladite photodiode (2) à ladite tension de polarisation ($V_S$) et ouvrir la fenêtre temporelle d'observation (OW) correspondante;
- décharger ledit premier élément d'accumulation de charge (101);

- une quatrième phase d) qui prévoit de désactiver ledit premier signal de contrôle de la commutation (SDRV) de manière à isoler ladite anode (21) de ladite photodiode (2);
- une cinquième phase e) qui prévoit, après un intervalle de temps préétabli ($T_{OW}$) qui correspond à la durée de ladite fenêtre temporelle d'observation (OW), de désactiver ledit deuxième signal de contrôle de la commutation (WIN) de manière à empêcher lesdits deuxièmes moyens électroniques d'interruption (4) et par conséquent de fermer ladite fenêtre temporelle d'observation (OW);
- une sixième phase f) qui prévoit d'autoriser ledit signal de propagation (CNT) pour un intervalle de temps préétabli ($T_{CNT}$).

**10.** Méthode selon la revendication 9, **caractérisée en ce qu'**elle prévoit, précédemment auxdits cycles de lecture (R), une phase de soft-reset qui comprend les opérations suivantes de:

- autorisation dudit signal de contrôle de la commutation (SDRV) et fixation de ladite valeur de référence de tension (VEB) à une valeur de tension essentiellement égale à ladite valeur de tension d'extra polarisation ($V_{EXC}$) de manière à désactiver ladite photodiode (2);
- autorisation dudit deuxième signal de contrôle de la commutation (WIN), dudit troisième signal de contrôle de la commutation (PRE) et dudit signal de propagation (CNT) et fixation de ladite valeur de référence de tension ($V_{BIAS}$) à une deuxième valeur de tension préétablie de manière à pré-charger ledit troisième élément d'accumulation de charge (103) à ladite deuxième valeur de tension préétablie.

**11.** Méthode selon la revendication 10, **caractérisée en ce qu'**elle prévoit, précédemment à ladite phase de soft-reset, une phase de hard-reset qui comprend les opérations suivantes de:

- autorisation dudit premier signal de contrôle de la commutation (SDRV) et fixation de ladite valeur de référence de tension (VEB) à une valeur de tension essentiellement égale à ladite valeur de tension d'extra polarisation ($V_{EXC}$) de manière à désactiver ladite photodiode (2);
- autorisation dudit deuxième signal de contrôle de la commutation (WIN), dudit troisième signal de contrôle de la commutation (PRE) et dudit signal de propagation (CNT) et fixation de ladite valeur de référence de tension ($V_{BIAS}$) à la masse de manière à décharger ledit deuxième élément d'accumulation de charge (102) et ledit troisième élément d'accumulation de charge (103).

**12.** Méthode selon l'une quelconque des revendications de 9 à 11 pour la gestion d'un pixel du type selon la revendication 3 ou une quelconque des revendications de 4 à 8 en combinaison avec la revendication 3, **caractérisée en ce que:**

- ledit deuxième signal de contrôle de la commutation (WIN) est fixé à une valeur de tension telle que:

$$WIN - V_{TH1} <= V_{EXC},$$

où $V_{TH1}$ représente la valeur de tension de seuil dudit deuxième transistor MOS (4);
- ledit signal de propagation (CNT), quand il est activé, est fixé à une valeur de tension telle que:

$$CNT <= WIN - V_{TH2},$$

où $V_{TH2}$ est la tension de seuil dudit troisième transistor MOS (5).

**13.** Méthode pour la gestion d'un pixel du type selon l'une quelconque des revendications de 1 à 8 pour exécuter le calcul du temps d'arrivée moyen d'un photon à l'intérieur de la fenêtre temporelle d'observation (OW) dans une séquence de cycles de lecture (R), **caractérisée en ce qu'**elle comprend les phases suivantes:

- régler et maintenir, durant l'exécution dudit comptage, ladite tension de polarisation ($V_S$) à l'entrée à ladite première broche d'entrée (11) à une valeur égale à la tension de claquage ($V_{BD}$) de ladite photodiode (2) augmentée d'une valeur de tension d'extra polarisation prédéfinie ($V_{EXC}$);
- activer et maintenir activé, durant l'exécution dudit comptage, ledit deuxième signal de contrôle de la commutation (WIN) de manière à mettre lesdits deuxièmes moyens électroniques d'interruption (4) à l'état de conduction;
- activer et maintenir activé ledit troisième signal de contrôle de la commutation (PRE) sur ladite septième broche d'entrée (17);
- prévoir pour chacun desdits cycles de lecture (R):

- une première phase a) qui prévoit d'exécuter essentiellement en même temps les opérations suivantes de fixer ladite valeur de référence de tension ($V_{BIAS}$) sur ladite sixième broche d'entrée (16) à une première valeur préétablie, de mettre ladite valeur de référence de tension (VEB) à la masse et d'activer ledit premier signal de contrôle de la commutation (SDRV) de manière à mettre lesdits premiers moyens électroniques d'interruption (3) à l'état de conduction, de polariser inversement ladite photodiode (2) à ladite tension de polarisation ($V_S$), d'ouvrir la fenêtre temporelle d'observation (OW) correspondante et de décharger ledit premier élément d'accumulation de charge (101);

- une deuxième phase b), successive à ladite première phase a), qui prévoit d'exécuter essentiellement en même temps les opérations suivantes de désactivation dudit premier signal de contrôle de la commutation (SDRV) et d'activation dudit signal de propagation (CNT);

- une troisième phase c) qui prévoit, après un intervalle de temps préétabli ($T_{OW}$) qui correspond à la durée de ladite fenêtre temporelle d'observation (OW), de désactiver ledit signal de propagation (CNT) de manière à empêcher lesdits quatrièmes moyens électroniques d'interruption (6) et de fermer ladite fenêtre temporelle d'observation (OW).

**14.** Méthode selon la revendication 13, **caractérisée en ce qu'**elle prévoit, précédemment auxdits cycles de lecture (R), une phase de soft-reset qui comprend les opérations suivantes de:

- autoriser ledit premier signal de contrôle de la commutation (SDRV) et fixer ladite valeur de référence de tension (VEB) à une valeur de tension essentiellement égale à ladite valeur de tension d'extra polarisation ($V_{EXC}$) de manière à désactiver ladite photodiode (2);

- activer ledit signal de propagation (CNT) et fixer ladite valeur de référence de tension ($V_{BIAS}$) à une deuxième valeur de tension préétablie de manière à pré-charger ledit troisième élément d'accumulation de charge (103) à ladite deuxième valeur de tension préétablie.

**15.** Méthode selon la revendication 14, **caractérisée en ce qu'**elle prévoit, précédemment à ladite phase de soft-reset, une phase de hard-reset qui comprend les opérations suivantes de:

- activer ledit premier signal de contrôle de la commutation (SDRV) et fixer ladite valeur de référence de tension (VEB) à une valeur de tension essentiellement égale à ladite valeur de tension d'extra polarisation ($V_{EXC}$) de manière à désactiver ladite photodiode (2);

- activer ledit signal de propagation (CNT) et mettre ladite valeur de référence de tension ($V_{BIAS}$) à la masse de manière à décharger ledit troisième élément d'accumulation de charge (103).

**16.** Capteur d'image (300) pour la détection d'un ou plusieurs photons, du type comprenant une matrice de pixel (301), de premiers et deuxièmes moyens électroniques de gestion (302, 303) reliés de manière opérationnelle à ladite matrice de pixel (301), lesdits premiers moyens électroniques de gestion (302) étant configurés pour générer des signaux de gestion de ladite matrice de pixel (301) et lesdits deuxièmes moyens électroniques de gestion (303) étant configurés pour gérer les signaux de sortie de ladite matrice de pixel (301), **caractérisé en ce que** chacun desdits pixels de ladite matrice (301) est un pixel (1) du type selon l'une quelconque des revendications de 1 à 8.

EP 3 259 905 B1

Fig.1

Fig.2

Fig.3

Fig.4a

Fig.4b

28

Fig.5

Fig.6

Fig.7

Fig.8

**EP 3 259 905 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014124653 A1
- EP 2728373 A1
- GB 2487958 A